# EUROPEAN PATENT APPLICATION

(11) **EP 4 449 954 A2**
(43) Date of publication of application: **23.10.2024**
(21) Application number: 24199261.9
(22) Date of filing: 19.08.2019
(51) Int. Cl.: A47J 27/09

(54) **BLENDER**

(30) Priority: 27.09.2018 CN 201811133942
(62) Divisional of application: 19864054.2
(71) Applicant: Zhejiang Shaoxing Supor Domestic Electrical Appliance Co., Ltd., Shaoxing, Zhejiang 312017 (CN)
(72) Inventor: CHEN, Yingjun, Shaoxing, 312017 (CN); CUI, Chun, Shaoxing, 312017 (CN)
(74) Representative: LLR

(57) **Abstract**

A blender comprises a bowl assembly (101, 201, 501), a mixing blade (106), and a lid assembly (108). The bowl assembly (101, 201, 501) forms a bowl cavity (110). The mixing blade(106) is provided inside the bowl cavity (110). The lid assembly (108) is arranged to cover the bowl assembly (101, 201, 501). The lid assembly (108) comprises a lid (102, 202, 302, 402, 502), a venting tube (103, 4031, 4032, 503), and a pressure limiting valve (104, 204, 304, 504). The lid (102, 202, 302, 402, 502) is provided with a through hole (135, 535) that traverses the lid (102, 202, 302, 402, 502) from top to bottom. The venting tube (103, 4031, 4032, 503) is provided in the through hole (135, 535) of the lid (102, 202, 302, 402, 502) and in communication with the bowl cavity(110), and comprises an air outlet (130). The pressure limiting valve (104, 204, 304, 504) is arranged to cover the venting tube (103, 4031, 4032, 503) and is capable of moving up and down. The pressure limiting valve (104, 204, 304, 504) blocks the air outlet (130) of the venting tube (103, 4031, 4032, 503) when the air pressure inside the bowl cavity (110) is lower than a pressure threshold, and opens the air outlet (130) of the venting tube (103, 4031, 4032, 503) when the air pressure inside the bowl cavity (110) is not lower than the pressure threshold.

## Description

### Field of the Invention

The invention relates to the domain of small home electrical appliances, and in particular, a blender.

### Background of the Invention

As people's quality of life improves day by day, many different types of blenders have emerged in the market. The functions of a blender can mainly include, but are not limited to: making soymilk, juicing, making rice paste, grounding meat, making shaved ice, making coffee, and/or preparing face masks. Blenders can include machines that smash and mix food materials, such as soymilk machines or high speed blender.

With existing blenders, when heating food materials, the maximum heating temperature is 100°C or below, which is commonly referred to as the boiling temperature of water. However, under actual atmospheric pressure, it is hard to reach 100°C, especially in high elevation regions, where the boiling temperature of water is only 90°C or even lower due to thin air. The maximum temperature reached when a blender heats a food material is therefore only 90°C or even lower.

In real life, there are special requirements for the temperature when preparing certain food. For example, when making soymilk, if the temperature is below 100°C, the soymilk usually has a taste of uncooked soybeans or is not fully cooked and thus undrinkable. Only when the temperature reaches 100°C or higher can the soymilk be fully cooked, which has a rich and aromatic taste and a better flavor, and is more nutritious. To solve the problem that food cannot be fully cooked, the cooking temperature (i.e., the boiling point of water) must be raised to above 100°C. For that, the air pressure inside a bowl of a blender must be raised above the standard atmospheric pressure. However, an increased air pressure inside the bowl creates a risk to the safety of using a blender. EP 3308685A1 discloses a cooking appliance comprising a base unit and a vessel. The base unit includes a driving unit for operating a stirring device in the vessel and a heating unit for heating the vessel. The vessel includes a pressure-resistant closure lid comprising a regulating valve for limiting the working overpressure in the vessel to a predetermined maximum overpressure. CN104055417 discloses an EPC which comprises a pressure limiting valve arranged on the lid of the EPC and to cover a venting tube.

### Summary of the Invention

One objective of the invention is to provide a blender with high safety. The invention is set out in the appended set of claims.

One aspect of the invention provides a blender comprising: a bowl assembly forming a bowl cavity; a mixing blade provided inside the bowl cavity; and, a lid assembly arranged to cover the bowl assembly and comprising: a lid provided with a through hole that traverses the lid from top to bottom; a venting tube provided in the through hole of the lid and in communication with the bowl cavity, comprising an air outlet; and, a pressure limiting valve that is arranged to cover the venting tube and is capable of moving up and down, the pressure limiting valve blocking the air outlet of the venting tube when the air pressure inside the bowl cavity is lower than a pressure threshold, and opening the air outlet of the venting tube when the air pressure inside the bowl cavity is not lower than the pressure threshold. The lid assembly comprises a venting lid that is assembled to the through hole, the venting tube being provided inside the venting lid, a venting lid sealing ring being provided between the venting lid and the lid, the pressure limiting valve being mounted on the venting lid.

Further, the pressure limiting valve comprises a valve body and a valve core fixed to the valve body and comprising a sleeve part that is sleeved outside the venting tube.

Further, the material of the valve core comprises a plastic.

Further, the difference between the inner diameter of the sleeve part and the maximum outer diameter of the venting tube that extends into the sleeve part is comprised between 0.6 mm and 1.4 mm.

Further, the bottom of the pressure limiting valve is provided with an elastic part that extends transversally inward, the venting tube being inserted into the pressure limiting valve by passing through the elastic part.

Further, the material of the elastic part comprises a plastic.

Further, the thickness of the elastic part is comprised between 0.8 mm and 1.5 mm.

Further, the bottom of the valve body is provided with an opening inside which is provided the elastic part, the elastic part being provided with a through hole through which the venting tube passes and extends into the valve core.

Further, the distance between the lower end face of the sleeve part and the upper surface of the elastic part is comprised between 1 mm and 3 mm.

Further, the difference between the maximum outer diameter of the venting tube that extends into the sleeve part and the diameter of the through hole is comprised between 0.6 mm and 1.4 mm.

Further, the elastic part is formed with a slot that extends from the perforated hole towards the outer edge of the elastic part.

Further, the bottom of the valve core has an opening where the elastic part is provided.

Further, the elastic part is formed with a through hole through which the venting tube passes and extends into the valve core, the difference between the maximum outer diameter of the venting tube that extends into the sleeve part and the diameter of the through hole being comprised between 0.6 mm and 1.0 mm.

Further, the valve core comprises a valve core cap that covers the sleeve part and abuts the valve body, and a counterweight part that is protruded below the valve core cap and surrounds the outside of the sleeve part, the lower end face of the counterweight part being not lower than the lower end face of the sleeve part.

Further, the pressure limiting valve comprises a plug that is fixed inside the valve core and matches the venting tube for blocking the air outlet.

Further, the material of the plug comprises at least one of a metal, a ceramic, and a plastic.

Further, the lid is provided with at least two venting tubes, and the lid assembly comprises at least two pressure limiting valves that are arranged to cover the corresponding venting tubes.

Further, the venting tube comprises a first venting tube and a second venting tube, the pressure limiting valve is arranged to cover one of the first venting tube and the second venting tube, and the lid assembly comprises a pressure detector that is in communication with the other of the first venting tube and the second venting tube.

Further, the bowl assembly comprises a metal bowl, and the lid comprises a metal lid that is arranged to cover the metal bowl.

Further, the bowl assembly comprises an outer bowl that receives the metal bowl, and the lid comprises an outer lid that covers the metal lid.

Further, a lid sealing ring is provided between the lid and the upper end face of the bowl opening of the bowl assembly, and at least one of the lid and the lid sealing ring is preferably provided with a sealing rib protruded at a location corresponding to the upper end face of the bowl opening of the bowl assembly.

Further, the lid assembly comprises an opening prevention assembly that is movably assembled to the lid between a locked state and an unlocked state. When the air pressure inside the bowl cavity is not lower than the pressure threshold, the opening prevention assembly locks the lid and the bowl assembly. When the air pressure inside the bowl cavity is lower than the pressure threshold, the opening prevention assembly unlocks the lid and the bowl assembly.

Further, the opening prevention assembly comprises an opening prevention valve and an opening prevention connecting rod that cooperates with the opening prevention valve in a position limiting way to be locked with the bowl assembly when the air pressure inside the bowl cavity is not lower than the pressure threshold.

Further, the lid is provided with a venting hole that is in communication with the bowl cavity. The opening prevention assembly comprises an opening prevention valve that is movably assembled to the venting hole of the lid. When it is in a sealed state, the opening prevention valve seals the venting hole.

Further, the lid assembly comprises a pressure releasing assembly that is movably assembled to the lid and abuts the opening prevention valve. The movement of the pressure releasing assembly drives the opening prevention valve to move to open the venting hole.

Further, the lid comprises an outer lid, an inner lid that is assembled below the outer lid in a manner capable of moving up and down, a lid sealing ring fixedly assembled to the inner lid, and a lid elastic element that elastically abuts between the inner lid and the outer lid.

Further, the lid comprises an outer lid, an inner lid that is removably assembled below the outer lid, and an inner lid mounting assembly that is assembled to the outer lid and removably assembled with the inner lid. The inner lid mounting assembly comprises an inner lid bracket that is assembled to the outer lid and passes through the inner lid, and an inner lid locking element that is arranged to lock with the inner lid bracket in a removable manner.

The lid of the blender of the invention is provided with a venting tube and a pressure limiting valve covering the venting tube. When the bowl of the blender is pressurized, the air pressure inside the bowl is maintained at a stable value by means of the pressure limiting valve. When the pressure inside the bowl cavity is relatively low, the pressure limiting valve falls down, blocking the air outlet of the venting tube and separating the bowl cavity from the exterior. When the air pressure inside the bowl cavity increases to a relatively high value, the vapor inside the bowl cavity lifts up the pressure limiting valve, opening the air outlet of the venting tube, evacuating the vapor, and reducing the air pressure inside the bowl cavity. Then the air pressure inside the bowl cavity drops, so the pressure limiting valve falls down by its own gravity and blocks the air outlet of the venting tube again. Thus, the pressure limiting valve is capable of moving up and down when the air pressure inside the bowl cavity changes, thus maintaining the air pressure inside the bowl cavity at a level that is safe and stable, eliminating or reducing safety risks caused by an excessive air pressure inside the bowl cavity. Thanks to the venting tube and the pressure limiting valve that are added to the blender, the function of pressurized cooking is enabled, which reduces cooking time, heats food materials until they are fully cooked, improves food taste, and increases the diversity of food materials that can be cooked. Moreover, the blender can perform mixing, breaking, and pressurized cooking of food materials, and can fulfill more functions and make more types of food, thus having greatly improved utility.

### Description of the Drawings

Figure 1 is a schematic view in perspective of an embodiment of the blender of the invention;
Figure 2 is an exploded view in perspective of the bowl assembly and lid assembly of the blender shown in Figure 1;
Figure 3 is a sectional view along A-A in Figure 1 of the bowl assembly and lid assembly of the blender shown in Figure 1;
Figure 4 is a partial, enlarged view of the bowl assembly and lid assembly shown in Figure 3;
Figure 5 is a longitudinal sectional view of the pressure limiting vale of the lid assembly of the blender shown in Figure 1;
Figure 6 is a schematic view in perspective of the pressure limiting valve shown in Figure 5;
Figure 7 is an exploded view in perspective of the pressure limiting valve shown in Figure 6;
Figure 8 is a partial, exploded view in perspective of the lid assembly of the blender shown in Figure 1;
Figure 9 is a sectional view along B-B in Figure 1 of the bowl assembly and lid assembly of the blender shown in Figure 1;
Figure 10 is a partial, enlarged view of the bowl assembly and lid assembly of the blender shown in Figure 9;
Figure 11 is a schematic view in perspective of the outer lid of the lid of the blender shown in Figure 1;
Figure 12 is another partial, enlarged view of the bowl assembly and lid assembly shown in Figure 9;
Figure 13 is another partial, enlarged view of the bowl assembly and lid assembly shown in Figure 9;
Figure 14 is a schematic view in perspective of the opening prevention assembly of the lid assembly of the blender shown in Figure 9;
Figure 15 is a schematic view in perspective of the bowl assembly of the blender shown in Figure 1;
Figure 16 is a sectional view along C-C in Figure 1 of the bowl assembly and lid assembly of the blender shown in Figure 1;
Figure 17 is a partial, enlarged view of the lid assembly shown in Figure 16;
Figure 18 is a schematic view in perspective of the pressure releasing assembly of the lid assembly of the blender shown in Figure 1;
Figure 19 is a partial, sectional view of another embodiment of the lid and pressure limiting valve of the lid assembly of the blender of the invention;
Figure 20 is a partial, enlarged view of another embodiment of the lid sealing ring of the lid assembly of the blender of the invention;
Figure 21 is an exploded view in perspective of another embodiment of the lid assembly and bowl assembly of the blender of the invention;
Figure 22 is an exploded view in perspective of another embodiment of the lid assembly and bowl assembly of the blender of the invention;
Figure 23 is an exploded view in perspective of another embodiment of the lid assembly and bowl assembly of the blender of the invention;
Figure 24 is a schematic view in perspective of another embodiment of the blender of the invention;
Figure 25 is a schematic view in perspective of another embodiment of the blender of the invention;
Figure 26 is an exploded view in perspective of the bowl assembly and lid assembly of the blender shown in Figure 25;
Figure 27 is a sectional view along D-D in Figure 25 of the bowl assembly and lid assembly of the blender shown in Figure 25;
Figure 28 is a partial, enlarged view of the bowl assembly and lid assembly shown in Figure 27;
Figure 29 is a schematic view in perspective of another configuration of the blender shown in Figure 25;
Figure 30 is a schematic view in perspective of another embodiment of the blender of the invention;
Figure 31 is an exploded view in perspective of the bowl assembly and lid assembly of the blender shown in Figure 30;
Figure 32 is a sectional view along E-E in Figure 30 of the bowl assembly and lid assembly of the blender shown in Figure 30;
Figure 33 is a partial, enlarged view of the lid assembly shown in Figure 32.

### Detailed Description of the Invention

Exemplary embodiments, which are illustrated in the drawings, will be described in detail here. In the description below, when it refers to the accompanying drawings, the same reference numbers in different drawings represent the same or similar elements, unless otherwise indicated. The modes of realization described in the exemplary embodiments below do not represent all the modes of realization in accordance with the invention. To the contrary, they are merely examples of devices in accordance with some aspects of the invention as described in detail in the appended claims.

The terms used in the application are merely for the purpose of describing specific embodiments, instead of limiting the invention. Unless otherwise defined, the technical terms or scientific terms used by the application shall have the common meaning as understood by a person of ordinary skills in the art to which the invention belongs. Wordings such as "first", "second" and so on used in the description and claims of the application do not represent any order, number, or significance, and are only used to distinguish different component parts. In the same way, wordings such as "one" or similar do not represent any limitation in number either, and mean that there is at least one. "Several" or "a number of" means two or more than two. Unless otherwise indicated, wordings such as "front", "back", "lower", and/or "upper" and similar are merely used for facilitating the description, and not for limiting to a position or a spatial orientation. Wordings such as "comprise" or "include" or similar mean that the element or object preceding "comprise" or "include" includes the element or object listed after "comprise" or "include" and does not exclude other elements or objects. Wordings such as "connect" or "connected" or similar are not limited to a physical or mechanical connection, and can include an electrical connection, whether direct or indirect. Singular forms such as "one," "the" and "this" used in the description and the appended claims of the application are intended to include the plural form, unless the context clearly indicates otherwise. It should also be understood that, the term "and/or" used herein means any and all possible combinations including one or more of the associated listed items.

The blender according to an embodiment of the invention comprises a bowl assembly, a mixing blade, and a lid assembly. The bowl assembly forms a bowl cavity. The mixing blade is provided inside the bowl cavity. The lid assembly is arranged to cover the bowl assembly. The lid assembly comprises a lid, a venting tube, and a pressure limiting valve. The lid is perforated with a through hole that traverses vertically the lid from its top to bottom. The venting tube is provided inside the through hole of the lid, in communication with the bowl cavity, and comprises an air outlet. The pressure limiting valve covers the venting tube and is capable of moving up and down. It blocks the air outlet of the venting tube when the air pressure inside the bowl cavity is lower than a pressure threshold, and opens the air outlet of the venting tube when the air pressure inside the bowl cavity is not lower than the pressure threshold.

The lid of the blender of the invention is provided with a venting tube and a pressure limiting valve covering the venting tube. When the bowl of the blender is pressurized, the air pressure inside the bowl is maintained at a stable value by means of the pressure limiting valve. When the pressure inside the bowl cavity is relatively low, the pressure limiting valve falls down, blocking the air outlet of the venting tube and separating the bowl cavity from the exterior. When the air pressure inside the bowl cavity increases to a relatively high value, the vapor inside the bowl cavity lifts up the pressure limiting valve, opening the air outlet of the venting tube, evacuating the vapor, and reducing the air pressure inside the bowl cavity. Then the air pressure inside the bowl cavity drops, so the pressure limiting valve falls down by its own gravity and blocks the air outlet of the venting tube. Thus, the pressure limiting valve is capable of moving up and down when the air pressure inside the bowl cavity changes, thus maintaining the air pressure inside the bowl cavity at a level that is safe and stable, eliminating or reducing safety risks caused by an excessive air pressure inside the bowl cavity. Thanks to the venting tube and the pressure limiting valve that are added to the blender, the function of pressurized cooking is enabled, which reduces cooking time, heats food materials until they are fully cooked, improves food taste, and increases the diversity of food materials that can be cooked. For example, some food that is not easy to cook can be cooked by pressurized cooking of the blender. Moreover, the blender can perform mixing, breaking, and pressurized cooking of food materials, fulfilling more functions and making more types of food, thus having greatly improved utility.

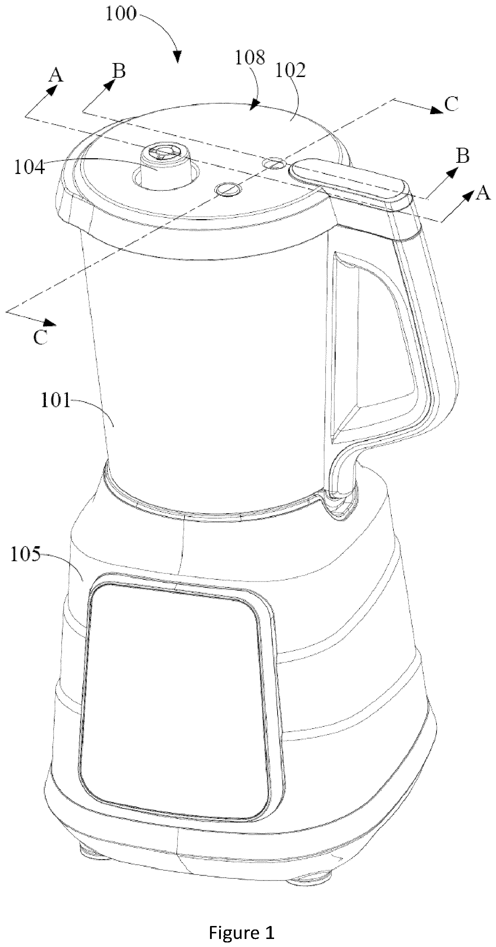

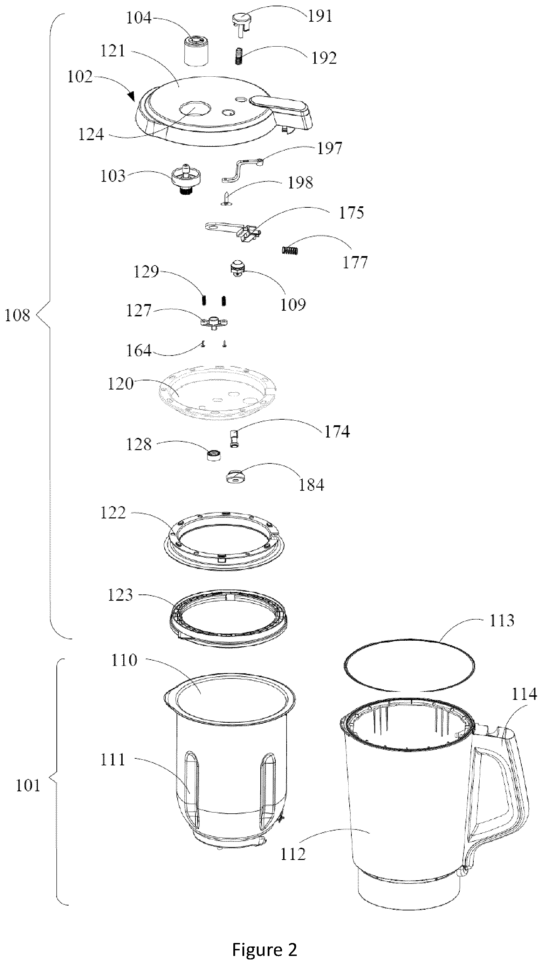

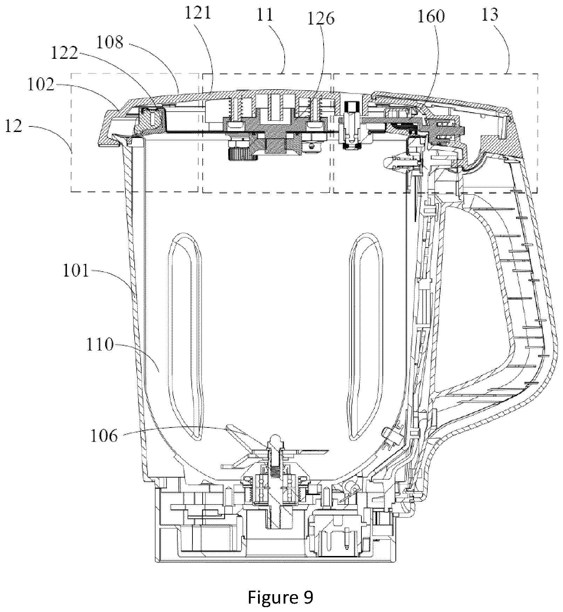

Figure 1 is a schematic view in perspective of an embodiment of the blender 100. Figure 2 is a partial, exploded view in perspective of the blender 100 shown in Figure 1. The blender 100 comprises a bowl assembly 101, a mixing blade 106 (as shown in Figure 9), and a lid assembly 108. In the illustrated embodiment, the blender 100 further comprises a main unit 105. The blender 100 of the embodiment of the invention can be a slightly pressurized blender capable of increasing the air pressure inside the bowl assembly 101 to above the standard atmospheric pressure so as to perform a pressurized cooking of the food materials and heat them to above 100°C. Heating food materials after the air pressure inside the bowl assembly 101 being increased can reduce cooking time, heat food materials until they are fully cooked, ensure the taste and nutrition of food materials, and increase the diversity of food materials that can be cooked. Moreover, the blender 100 can perform mixing, breaking, and pressurized cooking of food materials, fulfilling more functions and making more types of food, having greatly improved utility. In an embodiment, the air pressure inside the bowl assembly 101 can be increased to higher than the standard atmospheric pressure, the difference with which being lower than 20KPa. When the blender 100 is pressurized, the lid assembly 108 can be in a sealed state, sealing the bowl cavity 110 and maintaining the pressure inside it, without venting through a central venting lid.

In the embodiment illustrated, the main unit 105 is in the form of a socket. The bowl assembly 101 is removably assembled to the main unit 105. The main unit 105 can comprise an electric motor (not illustrated) driving the mixing blade 106 to rotate so as to mix and break food materials. The mixing blade 106 can be assembled to the bottom of the bowl assembly 101 for mixing and breaking food materials. A power supply control device (not illustrated) can be mounted inside the main unit 105, controlling the functioning of the blender 100 and powering certain electrical elements of the blender 100. In another embodiment, the electric motor and the power supply control device can be mounted inside the lid 102, and the mixing blade 106 extends downward from the lid 102 inside the bowl assembly 101.

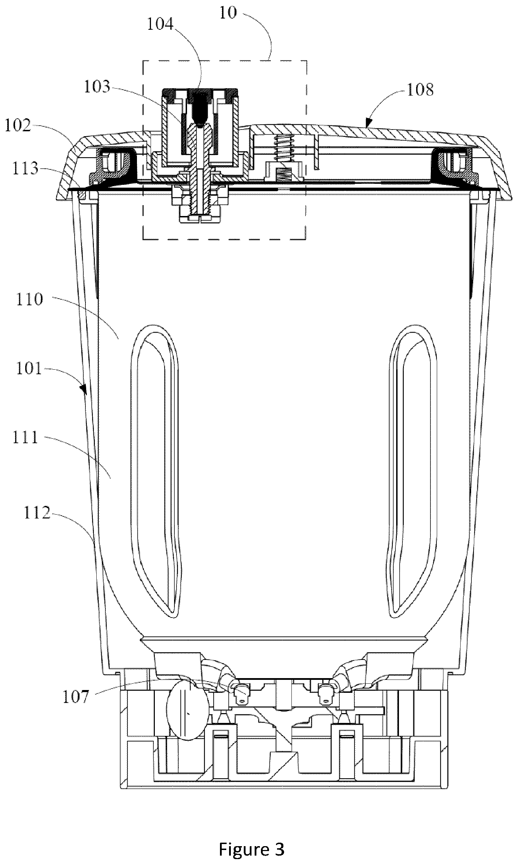

Figure 3 is a sectional view along A-A in Figure 1 of the bowl assembly 101 and lid assembly 108. With reference to Figures 1 to 3, the bowl assembly 101 forms a bowl cavity 110. The mixing blade 106 is provided inside the bowl cavity 110 (as shown in Figure 9). Food materials can be held inside the bowl cavity 110 of the bowl assembly 101 to be mixed and broken inside it. The bottom of the bowl assembly 101 is provided with a heating device 107 for heating food materials inside the bowl cavity 110. In an embodiment, the heating device 107 can comprise a heating tube. In another embodiment, the heating device 107 can comprise an electromagnetic heating device. The heating device 107 can heat food materials after the bowl cavity 110 is pressurized inside, so as to perform a pressurized cooking.

In the present embodiment, the bowl assembly 101 comprises an inner bowl 111 and an outer bowl 112 that receives the inner bowl 111. In an embodiment, the inner bowl 111 comprises a metal bowl forming the bowl cavity 110, and the outer bowl 112 receives the metal bowl 111. The metal bowl 111 increases the pressure resistance of the bowl body and ensures the safety to the maximum when the bowl is pressurized inside. The material of the metal bowl 111 is food grade. The material of the metal bowl 111 can comprise an alloy, such as five metals (gold, silver, copper, iron, tin) and stainless steel. The thickness of the material of the metal bowl 111 is comprised between 0.6 mm and 1.2 mm, ensuring the safety when the bowl is pressurized inside.

In an embodiment, the outer bowl 112 comprises a plastic and is heat insulated, preventing a user from being scalded. In other embodiments, the outer bowl 112 can comprise other materials, such as metal, ceramic, and enamel. A bowl body sealing ring 113 is provided between the opening of the outer bowl 112 and the metal bowl 111, sealing the gap between the metal bowl 111 and the outer bowl 112. A bowl handle 114 is provided at one side of the outer bowl 112 for a user to hold.

The lid assembly 108 is provided on the bowl assembly 101 to cover it. The lid assembly 108 comprises a lid 102, a venting tube 103, and a pressure limiting valve 104. In the illustrated embodiment, the lid 102 comprises an inner lid 120 and an outer lid 121 provided on the inner lid 120 to cover it. In an embodiment, the inner lid 120 comprises a metal lid provided on the metal bowl 111 to cover it, the outer lid 121 covers the metal lid 120. The metal lid 120 increases the pressure resistance of the lid, and ensures the safety to the maximum when the bowl is pressurized inside. The material of the metal lid 120 is a food grade material. The material of the metal lid 120 can comprise an alloy, such as five metals (gold, silver, copper, iron, tin) and stainless steel. In an embodiment, the thickness of the material of the metal lid 120 is comprised between 0.6 mm and 1.2 mm, ensuring the safety when the bowl is pressurized inside. The outer lid 121 comprises a plastic and is heat insulated, providing a relatively good appearance to the lid 102, and can protect parts assembled inside the lid 102. The metal bowl 111 and the metal lid 120 are more hygienic, and easy to clean.

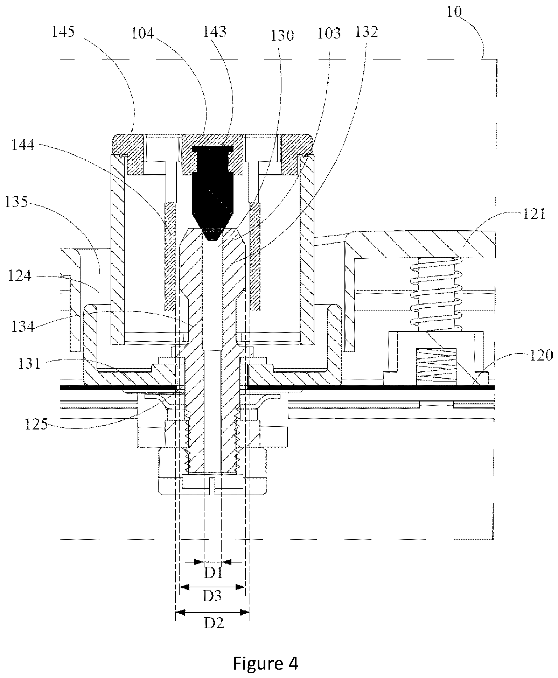

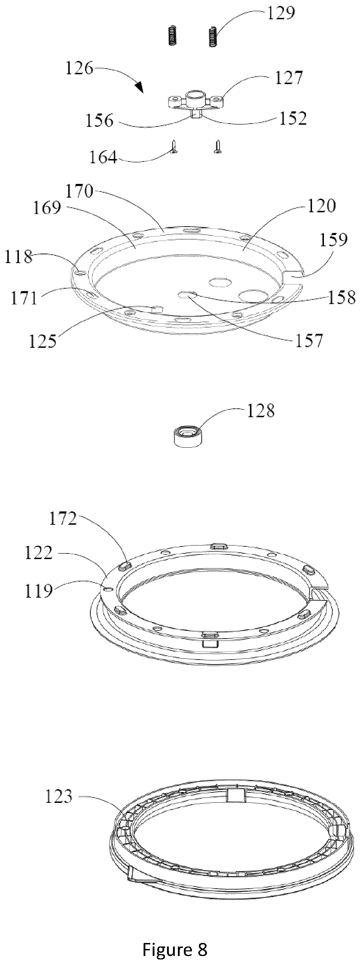

Figure 4 is an enlarged view of the partial area 10 in Figure 3. With reference to Figure 4, the lid 102 is provided with a through hole 135 that traverses vertically the lid 102. The through hole 135 traverses the upper surface and the lower surface of the lid 102. In the present embodiment, the outer lid 121 of the lid 102 has an outer lid hole 124, and the inner lid 120 has an inner lid hole 125 corresponding to the outer lid hole 124. The outer lid hole 124 traverses the outer lid 121, and the inner lid hole 125 (as shown in Figure 8) traverses the inner lid 120. The outer lid hole 124 and the inner lid hole 125 are in communication, forming a through hole 135.

The venting tube 103 is provided inside the through hole 135 of the lid 102. The venting tube 103 is in communication with the bowl cavity 110, and comprises an air outlet 130. The air outlet 130 is located at the top end of the venting tube 103, and in communication with the exterior. The venting tube 103 communicates the bowl cavity 110 with the exterior. In the present embodiment, the venting tube 103 is fixedly mounted inside the through hole 135 of the lid 102. The top end of the venting tube 103 can be lower than, flush with, or higher than the upper surface of the outer lid 121. The bottom end of the venting tube 103 can pass through the through hole 135 and extend into the bowl cavity 110. In other embodiments, the venting tube 103 can be located above the through hole 135, or partially extending downward into the through hole 135 and partially extending upward outside the through hole 135. In an embodiment, the venting tube 103 is fixedly assembled to the inner lid 120, and extends upward into the outer lid hole 124 of the outer lid 121. The venting tube 103 is assembled to the inner lid 120 through a tube base 131 fixed to the inner lid 120. The venting tube 103 is provided to traverse the tube base 131. In an embodiment, the inner lid 120 comprises a metal lid, and the venting tube 103 is fixedly assembled to the metal lid.

The pressure limiting valve 104 covers the venting tube 103 and is capable of moving up and down. It blocks the air outlet 130 of the venting tube 103 when the air pressure inside the bowl cavity 110 is lower than a pressure threshold, and opens the air outlet 130 of the venting tube 103 when the air pressure inside the bowl cavity 110 is not lower than the pressure threshold. The lid 102 of the blender 100 is provided with the venting tube 103 and the pressure limiting valve 140 covering the venting tube 103. When the air pressure inside the bowl cavity 110 is relatively low, the pressure limiting valve 104 falls down to block the air outlet 130 of the venting tube 103 and isolate the bowl cavity 110 from the exterior, thus allowing the pressurization of the bowl cavity 110. When the air pressure inside the bowl cavity 110 increases to be relatively high, the vapor inside the bowl cavity 110 lifts the pressure limiting valve 104 to open the air outlet 130 of the venting tube 103 and evacuate the vapor, thus reducing the air pressure inside the bowl cavity 110. After the air pressure inside the bowl cavity 110 has been reduced, the pressure limiting valve 104 falls down by its own gravity, blocking the air outlet 130 of the venting tube 103. Thus, the pressure limiting valve 104 is capable of moving up and down when the air pressure inside the bowl cavity 110 changes, maintaining the air pressure inside the bowl cavity 110 at a safe and stable level, eliminating or reducing safety risks caused by an excessive air pressure inside the bowl cavity 110. Adding the venting tube and the pressure limiting valve to the blender 100 enables the blender 100 to realize the function of pressurized cooking.

The pressure limiting valve 104 covers the venting tube 103 in a removable manner and can be removed from the venting tube 103 to facilitate the cleaning. In the embodiment shown in Figure 3, the pressure limiting valve 104 extends into the through hole 135 of the lid 102, and matches with the venting tube 103. In addition, the pressure limiting valve 104 protrudes upward outside the through hole 135 of the lid 102, facilitating its removal by a user.

In some embodiments, the pressure threshold can be the maximum relative air pressure value that can be reached when the bowl is pressurized inside, or is lower than the maximum air pressure value but higher than the standard atmospheric pressure. The maximum air pressure value can be a value preset according to the air pressure needed for a food material to be prepared. The pressure threshold is for example 20KPa, or lower than 20KPa. The weight of the pressure limiting valve 104 is designed to ensure that when the air pressure inside the bowl cavity 110 is not lower than the pressure threshold, vapor can lift the pressure limiting valve 104. The weight G of the pressure limiting valve 104 is calculated as G = (*Pₜₕ* - a)S/g, wherein Pₜₕ is the pressure threshold, a is the standard atmospheric pressure, S is the effective projection area of the pressure limiting valve 104 on the air outlet 130 of the venting tube 103, g is the gravity acceleration. The effective projection area S is calculated as S = π(*D*1/2)², wherein D1 is the inner diameter of the air outlet 130 of the venting tube 103. An expected pressure threshold can be preset, according to which the weight of the pressure limiting valve 104 is determined. In practical applications, due to processing tolerances and/or wearing, the weight of the pressure limiting valve 104 can be somewhat different. Therefore, in practical use, the pressure threshold will change as the weight of the pressure limiting valve 104 changes. However, this change should be within a permitted range, to ensure that the air pressure inside the bowl is essentially maintained around the expected air pressure value and to ensure that food materials can be fully heated.

While in use, when the relationship between the actual air pressure P inside the bowl cavity 110 and the weight G of the pressure limiting valve 104 is G ≤ (P - a)S/g, the vapor inside the bowl cavity 110 lifts the pressure limiting valve 104, and starts to be evacuated, until G = (P - a)S/g, at which time the pressure limiting valve 104 falls down to block the venting tube 103 and thus always maintaining the air pressure inside the bowl cavity 110 at a stable value.

In the embodiment shown in Figure 2, the lid assembly 108 comprises a safety valve 109 mounted to the lid 102. The safety valve 109 is mounted to the inner lid 120, and is covered by the outer lid 121. When the air pressure inside the bowl cavity 110 is too high but the pressure limiting valve 104 is blocked by, for example, food materials and cannot normally vent, the vapor inside the bowl cavity 110 lifts the safety valve 109 to start venting. Vapor is evacuated to the exterior via the gap between the inner lid 120 and the outer lid 121. After the air pressure inside the bowl cavity 110 has been reduced, the safety valve 109 falls down, sealing the gap between itself and the inner lid 120 to maintain the pressure inside the bowl. The air pressure for lifting the safety valve 109 is higher than that for lifting the pressure limiting valve 104. When the pressure limiting valve 104 is not blocked and functions normally, the safety valve 109 is in a sealing state.

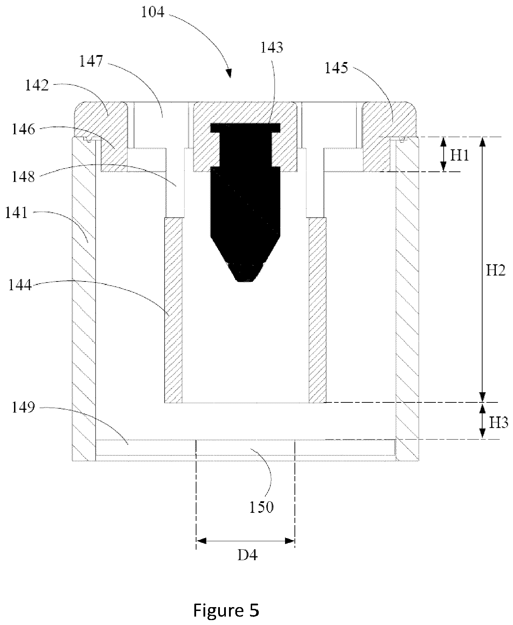

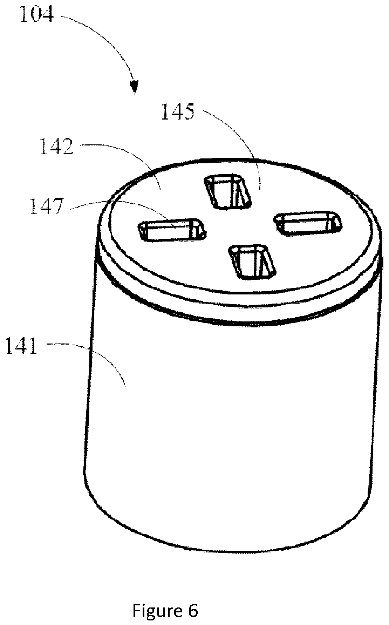

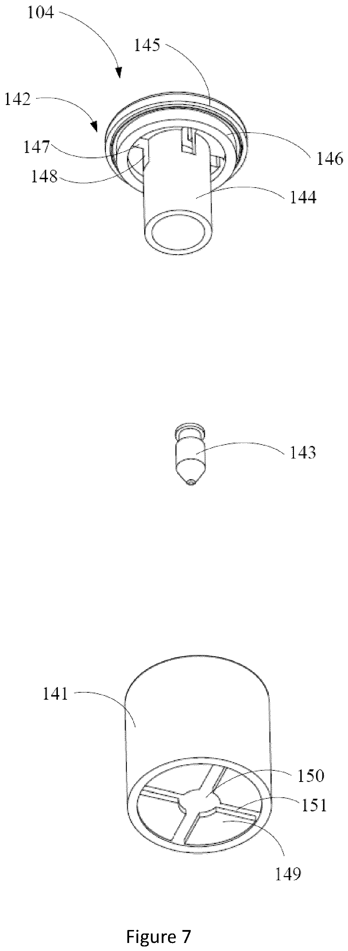

Figure 5 is a longitudinal sectional view of the pressure limiting valve 104. Figure 6 is a schematic view in perspective of the pressure limiting valve 104. Figure 7 is an exploded view in perspective of the pressure limiting valve 104. With reference to Figures 4 to 7, the pressure limiting valve 104 comprises a valve body 141 and a valve core 142 fixed to the valve body 141. The valve body 141 is sheathed outside the valve core 142. In an embodiment, the valve body 141 is open at the top and at the bottom, forming a hollow cylinder. In an embodiment, the material of the valve body 141 comprises a plastic. Thus the valve body 141 is relatively light and heat insulated, preventing a user from being scalded when taking out the pressure limiting valve 104.

In an embodiment, the material of the valve core 142 comprises a plastic. Thus, the valve core 142 is relatively light, making the overall weight of the pressure limiting valve 104 relatively light, enabling it to be lifted by vapor when the bowl is slightly pressurized inside and ensuring the slightly pressurized state inside the bowl. Because the bowl is slightly pressurized inside, the plastic can withstand the temperature inside the bowl. In some embodiments, the valve core 142 and the valve body 141 can be assembled together by ultrasound plastic welding or by snap-fit. In an embodiment, the vale core 142 is sheathed outside the venting tube 103 and limits the venting tube 103. The valve core 142 comprises a sleeve part 144 that is sheathed outside the venting tube 103. The difference between the inner diameter D2 of the sleeve part 144 and the maximum outer diameter D3 of the venting tube 103 that extends into the sleeve part 144 is comprised between 0.6 mm and 1.4 mm, which can facilitate the assembling, and ensure a relatively good cooperation between the venting tube 103 and the sleeve part 144 of the valve core 142. The maximum outer diameter D3 of the venting tube 103 that extends into the sleeve part 144 is the diameter of the part of the venting tube 103 that extends into the sleeve part 144 at its widest point. In an embodiment, the head 132 of venting tube 103 that extends into the sleeve part 144 is relatively wide, while the neck 134 located below the head 132 is relatively narrow. The maximum outer diameter D3 of the venting tube 103 that extends into the sleeve part 144 is the maximum outer diameter of the head 132.

In an embodiment, the valve core 142 comprises a valve core cap 145 that covers the sleeve part 144 and abuts the valve body 141, and a counterweight part 146 that is provided to protrude below the valve core cap 145. In the embodiment shown in Figure 5, the valve core cap 145 is pressed against the upper end face of the valve body 141 and covers the top opening of the valve body 141. The valve core cap 145 forms a valve air outlet 147 that traverses the valve core cap 145 and opens to the exterior. Multiple valve air outlets 147 may be formed. The sleeve part 144 extends downward from the middle of the lower surface of the valve core cap 145. The upper part of the sleeve part 144 is perforated with a sleeve through hole 148 that is in communication with the valve air outlet 147 of the valve core cap 145, communicating the interior space of the sleeve part 144 with the exterior. The venting tube 103 and the interior space of the sleeve part 144 are in communication. Therefore, the venting tube 103 can communicate with the exterior via the sleeve through hole 148 and the valve air outlet 147, providing a passage for evacuating vapor. Multiple sleeve through holes 148 can be formed, corresponding to multiple valve air outlets 147.

The counterweight part 146 surrounds the outside of the sleeve part 144. The lower end face of the counterweight part 146 is not lower than the lower end face of the sleeve part 144. When designing the device, the weight of the pressure limiting valve 104 can be adjusted by dimensioning the height of the counterweight part 146, so as to adjust limiting pressure of the pressure limiting valve 104 and to control the pressure inside the bowl and meet different pressurization needs. In the illustrated embodiment, the junction between the top end of the counterweight part 146 and the valve core cap 145 is flush with the upper end face of the valve body 141. The height H1 of the counterweight part 146 is larger than 0, and smaller than or equal to the height H2 which corresponds to the distance between the upper end face of the valve body 141 and the lower end face of the sleeve part 144. In an embodiment, the counterweight part 146 is located near the outer edge of the valve core cap 145 and extends into the valve body 141. The counterweight part 146 can cooperate with the valve body 141 in a position limiting manner.

In an embodiment, the pressure limiting valve 104 comprises a plug 143 fixed inside the valve core 142. The plug 143 matches the venting tube 103 for blocking the air outlet 130. The plug 143 protrudes from the valve core cap 145 and extends downward into the sleeve part 144, and is inserted in the venting tube 103 inside the sleeve part 144. When the pressure limiting valve 104 falls down, the plug 143 blocks the venting tube 103. When the pressure limiting valve 104 is lifted by vapor, a gap appears between the plug 143 and the venting tube 103, opening the venting tube 103 for evacuating vapor. The end of the plug 143 that is inserted into the venting tube 103 gradually converges towards the inside of the venting tube 103.

In an embodiment, the material of the plug 143 comprises at least one of metal, ceramic, and plastic. The plug 143 can be integrally formed inside the valve core 142. In an embodiment, the material of the plug 143 comprises at least one of metal and ceramic. When being formed, the plug 143 is inserted into a mold for injection molding. During the molding of the valve core 142, the plug 143 is fixed inside the valve core 142. Thus, the plug 143 is integrally formed inside the valve core 142. In another embodiment, the material of the plug 143 comprises a plastic. The plug 143 and the valve core 142 can be integrally formed by integral molding in a mold. Thus, the plug 143 is integrally formed inside the valve core 142.

In an embodiment, the bottom of the pressure limiting valve 104 is provided with an elastic part 149 that extends transversally inward. The venting tube 103 passes through the elastic part 149 and is inserted into the pressure limiting valve 104. In an embodiment, the head 132 of the venting tube 103, which is relatively wider, passes through the elastic part 149 and is located above the elastic part 149, while the neck 134, which is relatively narrower, is limited in position at the elastic part 149. The elastic part 149 has elasticity. The venting tube 103 can pass through the elastic part 149 and be inserted into the pressure limiting valve 104, and can be maintained inside the pressure limiting valve 104 after the insertion. Moreover, the pressure limiting valve 104 can move up and down relative to the venting tube 103. In an embodiment, the thickness of the elastic part 149 is comprised between 0.8 mm and 1.5 mm, to ensure the elasticity of the elastic part 149 and the tightness during assemblage of the venting tube 103, preventing the problems that the elastic part 149 is not sufficiently resistance when it is too thin or is difficult to assemble when it is too thick. In an embodiment, the material of the elastic part 149 comprises a plastic, which can provide relatively good elasticity, is easy to assemble, and can withstand the temperature when the bowl is slightly pressurized inside.

In an embodiment, the bottom of the valve body 141 is provided with an opening inside which the elastic part 149 is arranged. The elastic part 149 is provided with a through hole 150 through which the venting tube 103 passes and extends into the valve core 142. The through hole 150 is perforated in the middle of the elastic part 149. In an embodiment, the elastic part 149 is in the form of a sheet. In an embodiment, the elastic part 149 can be integrally formed with the valve body 141. In an embodiment, the elastic part 149 is provided with a slot 151. As shown in Figure 7, the slot 151 extends from the through hole 150 towards the outer edge of the elastic part 149. The outer edge of the elastic part 149 is connected with the valve body 141. The slot 151 is a through slot that traverses the thickness of the elastic part 149. The slot 151 can increase the elasticity and duration of life of the elastic part 149. In an embodiment, the slot 151 extends along the radial direction of the elastic part 149. In another embodiment, the slot 151 extends along a curve, such as an S shape. In an embodiment, multiple slots 151 are provided. In the illustrated embodiment, multiple slots 151 are arranged in the form of a cross.

In an embodiment, as shown in Figure 5, the height H3 corresponding to the distance between the lower end face of the sleeve part 144 and the top surface of the elastic part 149 is comprised between 1 mm and 3 mm, to ensure the recovery space of the elastic part 149 and that the valve body 141 can completely cover the upper part of the venting tube 103. In an embodiment, the difference between the maximum outer diameter D3 of the venting tube 103 and the diameter D4 of the through hole 150 is comprised between 0.6 mm and 1.4 mm, ensuring that the venting tube 103 can relatively easily pass through the through hole 150 of the elastic part 149 and maintain the assemblage and matching with the pressure limiting valve 104, and that the elastic part 149 can cooperate with the venting tube 103 relatively well.

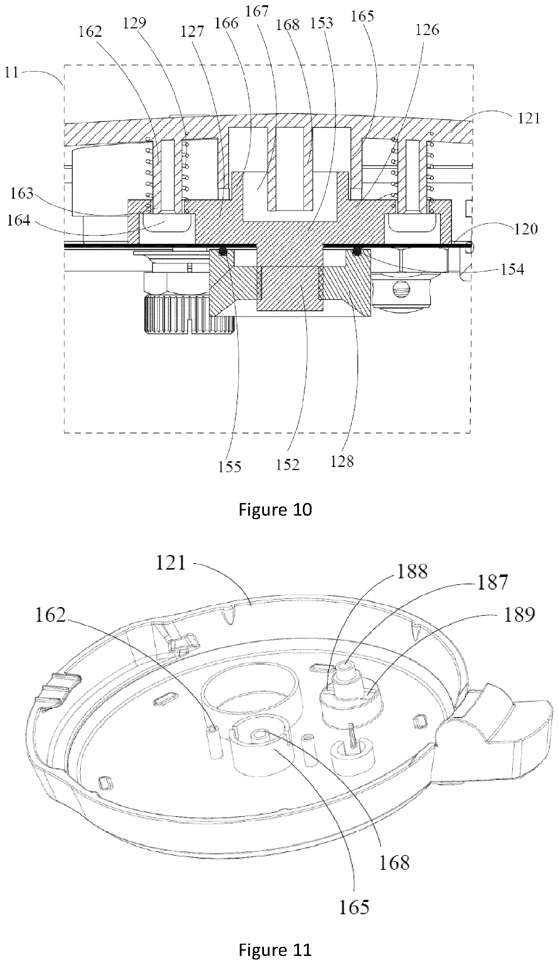

Figure 8 is an exploded view in perspective of some elements of the blender 100 shown in Figure 2. Figure 9 is a sectional view along B-B in Figure 1 of the bowl assembly 101 and the lid 102. Figure 10 is an enlarged view of the partial area 11 in Figure 9. The inner lid 120 is assembled in a removable way below the outer lid 121. The lid assembly 108 further comprises an inner lid mounting assembly 126 assembled to the outer lid 121 and removably assembled with the inner lid 120. The inner lid mounting assembly 126 comprises an inner lid bracket 127 assembled to the outer lid 121 and passing through the inner lid 120, and an inner lid locking element 128 arranged to be locked to the inner lid bracket 127 in a removable manner. The inner lid locking element 128 can be removed from the inner lid bracket 127 to remove the inner lid 120 from the outer lid 121. The inner lid 120 can be fitted onto the inner lid bracket 127 and the inner lid locking element 128 can be locked to the inner lid bracket 127, so as to mount the inner lid 120 to the outer lid 121. Thus, the inner lid 120 can be conveniently removed and mounted and can be removed to be cleaned which facilitates its cleaning.

The inner lid bracket 127 comprises a bracket cooperating part 153 that cooperates with the outer lid 121, and an inner lid mounting part 152 that is fixedly connected to the bracket cooperating part 153. The inner lid mounting part 152 passes downward through the inner lid 120 and is locked with the inner lid locking part 128 below the inner lid 120. In an embodiment, the inner lid mounting part 152 comprises a bolt passing through the inner lid 120. The inner lid locking element 128 comprises a manually rotated nut to be rotated on the bolt 128. The nut 128 can be manually rotated to remove and mount the inner lid 120, without having to resort to any tool, so that the removal and mounting of the inner lid 120 is facilitated for a user. In an embodiment, the bolt 152 is integrally formed at the bottom of the bracket cooperating part 153. The bolt 152 can comprise a metal bolt, which is placed in a mold for injection molding by which the bracket cooperating part 153 is formed. Thus, the bolt 152 is integrally formed at the bottom of the bracket cooperating part 153. The bracket cooperating part 153 and the inner lid locking element 128 clamp the inner lid 120 in between them.

In an embodiment, a flat part 156 is provided at the outer side of the inner lid bracket 127. As shown in Figure 8, the inner lid 120 is perforated with a bracket mounting hole 157 having a straight section 158 that cooperates with the flat part 156 of the bracket in a position limiting manner. Thus, the rotation of the inner lid 120 can be prevented. In an embodiment, an outer side of the inner lid mounting part 152 is provided with the flat part 156. In an embodiment, the flat part 156 of the bracket is formed at a side of the bolt 152. In an embodiment, a pair of flat parts 156 are formed on two opposing sides of the inner lid bracket 157, and a corresponding pair of straight sections 158 are formed on the edge of the bracket mounting hole 157. In the illustrated embodiment, the two ends of the bracket mounting hole 157 are in the form of an arc that is connected with the straight sections 158, and the bracket mounting hole 157 presents a form that is axially symmetric.

In an embodiment, as shown in Figure 10, a sealing ring 154 is provided between the inner lid locking element 128 and the inner lid 120, sealing the gap between the inner lid locking element 128 and the inner lid 120, and preventing vapor from escaping. In an embodiment, the side of the inner lid locking element 128 facing the inner lid 120 is recessed to form a sealing groove 155. The sealing ring 154 is held inside the sealing groove 155 in a snap-fit manner, and can be removed from the inner lid bracket 127 together with the inner lid locking element 128.

In an embodiment, as shown in Figure 9, the lid assembly 108 comprises an opening prevention assembly 160 that is connected to the lid 102 in a movable manner, used for preventing the lid 102 from opening when the air pressure inside the bowl cavity 110 is relatively high. The opening prevention assembly 160 will be described in detail below. In the illustrated embodiment, the opening prevention assembly 160 is assembled to the outer lid 121. The side of the inner lid 120 corresponding to the opening prevention assembly 160 is provided with a bypass groove 159, through which the opening prevention assembly 160 passes. The opening prevention assembly 160 transversally passes through the bypass groove 159, which can limit the position of the opening prevention assembly 160.

In an embodiment, with reference to Figures 8 and 10, the inner lid 120 is assembled to the outer lid 121 in a manner capable of moving up and down. The lid assembly 108 comprises a lid sealing ring 122 fixedly assembled to the inner lid 120, and a lid elastic element 129 that elastically abuts between the inner lid 120 and the outer lid 121. The lid elastic element 129 provides an elastic force for the inner lid 120 and the lid sealing ring 122 to move up and down relative to the outer lid 121. The inner lid 120 can move up and down through the lid elastic element 129. The lid sealing ring 122 can move up and down together with the inner lid 120. The lid sealing ring 122 is provided between the lid 102 and the bowl assembly 101 in a sealed manner, to seal the gap between the lid 102 and the bowl assembly 101. In the illustrated embodiment, the lid sealing ring 122 is sealingly provided between the lower end face of the lid 102 and the upper end face of the bowl opening of the bowl assembly 101.

When the pressure limiting valve 104 (as shown in Figure 3) and the safety valve 109 (as shown in Figure 2) are blocked by food materials and cannot vent normally, the inner lid 120 that is movably connected can move upward when pushed by the air pressure inside the bowl, compressing the lid elastic element 129. The lid sealing ring 122 assembled to the inner lid 120 moves upward with it. That is to say, the lid sealing ring 122 is lifted up, causing a gap to appear between the lid 102 and the bowl assembly 101 for venting. Thus, the safety of the blender 100 operating in a pressurized manner is ensured to a maximum extent. After the air pressure inside the bowl has been reduced, the lid elastic element 129 returns, pressing and pushing the inner lid 120 downward, causing the lid sealing ring 122 to abut against the bowl assembly 101 in a sealed manner.

Figure 11 is a schematic view in perspective of the outer lid 121 shown from the bottom. With reference to Figures 8 to 11, the bottom surface of the outer lid 121 has a guiding column 162 extending to protrude towards the inner lid. The lid elastic element 129 is assembled to the guiding column 162, and elastically deforms along the guiding column 162. The guiding column 162 can guide the direction of movement of the inner lid 120. In an embodiment, the lid elastic element 129 is sleeved outside the guiding column 162. The lid elastic element 129 can be a spring.

In an embodiment, the lid elastic element 129 abuts between the outer lid 121 and the inner lid bracket 127. The lid elastic element 129 abuts between the outer lid 121 and the bracket cooperating part 153 of the inner lid bracket 127. In an embodiment, the inner lid bracket 127 is perforated with a guiding hole 163 that is sleeved outside the guiding column 162 and moves up and down along the guiding column 162. Thus, the inner lid 120 is made to move along the direction in which the guiding column 162 extends. In the illustrated embodiment, the bottom surface of the outer lid 121 is provided with a pair of protruding guiding columns 162, and the inner lid bracket 127 is provided with a pair of guiding holes 163. Thus, a stable movement of the inner lid 120 is ensured.

In an embodiment, the lid assembly 108 comprises a bracket position limiting element 164 that passes through the guiding hole 163 and fixedly fitted to the guiding column 162. The end of the bracket position limiting element 164 located below the guiding hole 163 protrudes transversally relative to the guiding hole 163, and limits the position of the inner lid bracket 127 below the guiding hole 163. As such, the inner lid bracket 127 is assembled to the outer lid 121. The bracket position limiting element 164 is fixed to the guiding column 162. The bracket position limiting element 164 can comprise a screw.

In an embodiment, the bottom surface of the outer lid 121 is provided with an outer lid position limiting protruding wall 165 that protrudes downward, and the inner lid bracket 127 is provided with an inner lid position limiting protrusion 166 that protrudes upward and cooperates with the outer lid position limiting protruding wall 165. The outer lid position limiting protruding wall 165 and the inner lid position limiting protrusion 166 cooperate with each other in the transversal direction and in the longitudinal direction in a position limiting manner, limiting the transversal position of the inner lid 120 and the maximum course of upward movement of the inner lid 120. In an embodiment, the inner lid position limiting protrusion 166 at least partially extends inside the outer lid position limiting protruding wall 165. In an embodiment, the middle of the inner lid position limiting protrusion 166 is recessed to form a position limiting slot 167, the bottom surface of the outer lid 121 is provided with a position limiting column 168 protruding downward inside the outer lid position limiting protruding wall 165, and the position limiting column 168 and the position limiting slot 167 cooperate with each other in a position limiting manner. In an embodiment, the outer lid position limiting protruding wall 165 and the position limiting column 168 are located between a pair of guiding columns 162.

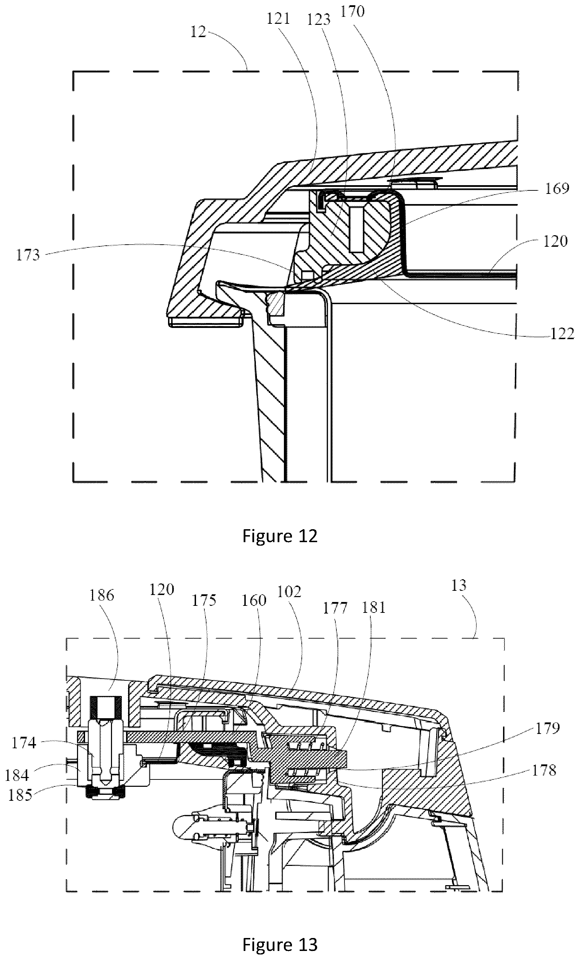

Figure 12 is an enlarged view of the area 12 shown in Figure 9. With reference to Figures 8, 9, and 12, in an embodiment, the lid assembly 108 comprises a sealing ring bracket 123 assembled below the outer lid 121, and the lid sealing ring 122 is assembled to the sealing ring bracket 123 to seal the gap between the sealing ring bracket 123 and the bowl assembly 101. In an embodiment, the sealing ring bracket 123 surrounds the outside of the inner lid 120. The lid sealing ring 122 is assembled between the sealing ring bracket 123 and the inner lid 120, sealing the gap there between. The material of the sealing ring bracket 123 can comprise a plastic. The lid sealing ring 122 can be better fixed by means of the sealing ring bracket 123. In an embodiment, the inner lid 120 comprises a metal lid, the inner bowl 111 comprises a metal bowl, the sealing ring bracket 123 is assembled to the metal lid, and the lid sealing ring 122 is held in a snap-fit manner between the sealing ring bracket 123 and the metal lid, and seals the gap between the metal lid and the metal bowl.

In an embodiment, the inner lid 120 comprises a circular inner lid side wall 169 and an inner lid flange 170 extending outward from the inner lid side wall 169. The sealing ring bracket 123 surrounds the outside of the inner lid side wall 169, and is pressed against the inner lid flange 170 at the top. The lid sealing ring 122 extends between the sealing ring bracket 123 and the flange 170, and between the sealing ring bracket 123 and the inner lid side wall 169, and further below the sealing ring bracket 123, so as to be sealed with the bowl assembly 101.

In an embodiment, one of the inner lid 120 and the lid sealing ring 122 is provided with a snap-fit holding hole, and the other is provided with a snap-fit holding protrusion that is held in a snap-fit manner inside the snap-fit holding hole. In the illustrated embodiment, the inner lid 120 is provided with a snap-fit holding hole 171, the lid sealing ring 122 is provided with a snap-fit holding protrusion 172 that protrudes upward and is held in a snap-fit manner inside the snap-fit holding hole 171. The inner lid 120 is provided with a snap-fit holding protrusion 118 protruding downward, and the lid sealing ring 122 is provided with a snap-fit holding hole 119 that cooperates with a snap-fit holding protrusion 118. The lid sealing ring 122 is fixed to the inner lid 120, by means of the snap-fit holding cooperation between the snap-fit holding protrusion 172 and the snap-fit holding hole 171 and also the snap-fit holding cooperation between the snap-fit holding protrusion 172 and the snap-fit holding hole 171. In another embodiment, the snap-fit holding protrusion 172 and the snap-fit holding hole 171 can be omitted, or the snap-fit holding protrusion 118 and the snap-fit holding hole 119 can be omitted, and a set of the snap-fit holding protrusion 172 and the snap-fit holding hole 171 can be provided. In an embodiment, the snap-fit holding hole 171 and the snap-fit protrusion 118 are formed at the inner lid flange 170 of the inner lid 120, and the snap-fit holding protrusion 172 and the snap-fit holding hole 119 are formed at the upper end face of the lid sealing ring 122.

In an embodiment, at least one of the lid 102 and the lid sealing ring 122 is provided with a protruding sealing rib at a location corresponding to the bowl opening upper end face of the bowl assembly 101, improving the sealed contact between the lid sealing ring 122 and the bowl assembly 101. In the embodiment illustrated in Figure 12, the sealing rib comprises a lid sealing rib 173 protruded from the lower end face of the lid 102. The lid sealing rib 173 presses the lid sealing ring 122 to the bowl opening top face of the bowl assembly 101. The lid sealing rib 173 is protruded from the sealing ring bracket 123. In an embodiment, the lower end face of the lid 102 is provided with at least two protruded lid sealing ribs 173, which are arranged radially relative to the lid 102. Thus, a better sealing result is achieved.

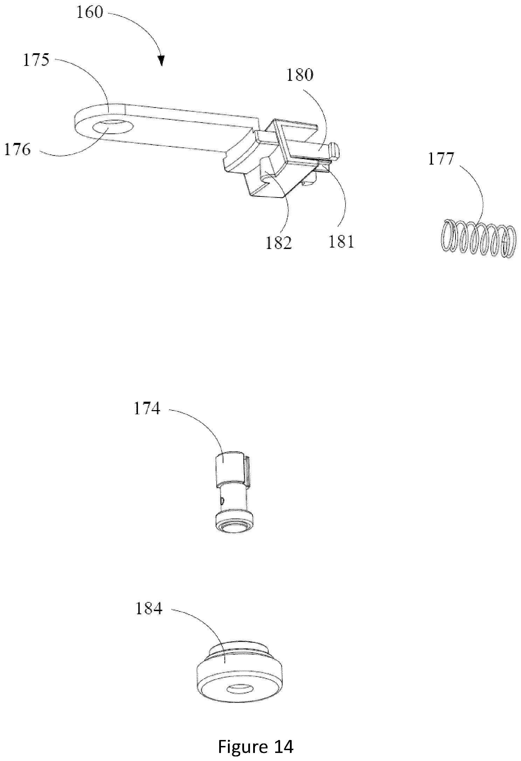

Figure 13 is an enlarged view of the area 13 in Figure 9. Figure 14 is an exploded view in perspective of the opening prevention assembly 160. With reference to Figures 9, 13 and 14, the opening prevention assembly 160 can take a locked state and an unlocked state. In the locked state, the opening prevention assembly 160 locks the lid 102 with the bowl assembly 101, preventing the cover from being opened. In the unlocked state, the opening prevention assembly 160 unlocks the lid 102 and the bowl assembly 101, permitting the cover to be opened. The air pressure inside the bowl cavity 110 in the unlocked state is lower than that in the locked state. When the air pressure inside the bowl is high, the cover is not allowed to be opened. Once the air pressure is reduced, the cover is allowed to be opened. When the air pressure inside the bowl cavity 110 is higher than outside air pressure, the opening prevention assembly 160 prevents the lid 102 from being opened. Thus, hot food materials sprayed from the inside of the bowl due to an overly high air pressure of the bowl cavity and the vapor inside the bowl cannot scald the user. When the air pressure inside the bowl cavity 110 is reduced to be equivalent to outside air pressure, the opening prevention assembly 160 is unlocked and the lid 102 can be opened.

In an embodiment, the opening prevention assembly 160 comprises an opening prevention valve 174 and an opening prevention connecting rod 175 that cooperates with the opening prevention valve 174. The opening prevention connecting rod 175 is assembled to the lid 102 in a movable manner. When the opening prevention valve 174 and the opening prevention connecting rod 175 cooperate with each other in a position limiting way, the opening prevention connecting rod 175 is locked with the bowl assembly 101. The opening prevention connecting rod 175 can move transversally, and the opening prevention valve 174 can move up and down. When food is being heated inside the bowl cavity 110, due to the accumulation of water vapor, a positive pressure relative to the outside of the bowl is formed, and the air pressure inside the bowl cavity 110 is higher than outside air pressure, lifting up the opening prevention valve 174. The opening prevention valve 174 and the opening prevention connecting rod 175 cooperate with each other in a position limiting manner, the opening prevention valve 174 blocks the movement of the opening prevention connecting rod 175, and the opening prevention connecting rod 175 is locked with the bowl assembly 101. When the air pressure of the bowl cavity 110 is released to equivalent to outside air pressure, the opening prevention valve 174 falls down and is separated from the opening prevention connecting rod 175, which can move, thus allowing the lid 102 to be opened. Thus, the cover can be opened safely, preventing a user from being burnt.

In an embodiment, the opening prevention connecting rod 175 is provided with an opening prevention hole 176 that cooperates with the opening prevention valve 174 in a position limiting manner. When the opening prevention valve 174 is inserted into the opening prevention hole 176, the opening prevention connecting rod 175 is locked with the bowl assembly 101. When the opening prevention valve 174 is separated from the opening prevention hole 176, the opening prevention connecting rod 175 is unlocked from the bowl assembly 101. When the opening prevention valve 174 is lifted up and inserted into the opening prevention hole 176, the opening prevention connecting rod 175 is prevented from moving. When the opening prevention valve 174 falls down and is separated from the opening prevention hole 176, the opening prevention connecting rod 175 can move. The lid 102 comprises a lid handle 178. One end of the opening prevention connecting rod 175 is inserted into the lid handle 178, and the opening prevention connecting rod 175 extends from the lid handle 178 to above the bowl cavity 110. The other end of the opening prevention connecting rod 175 corresponds to the location of the opening prevention vale 174 and is perforated with the opening prevention hole 176.

In an embodiment, an opening prevention mounting hole 179 is formed at a side wall of the lid handle 178, one end of the opening prevention connecting rod 175 is provided with an elastic snap-fit tab 180 that is inserted into the opening prevention mounting hole 179 and snap-fitted to the hole edge of the opening prevention mounting hole 179 at the opposite side of the bowl cavity 110. As such, the lid handle 178 is assembled to the lid 102. One end of the opening prevention connecting rod 175 has a pair of elastic snap-fit tabs 180 and a guiding bar 181 that can guide the movement of the opening prevention connecting rod 175. One end of the guiding bar 181 can extend into the opening prevention mounting hole 179. The guiding bar 181 is located between the elastic snap-fit tabs 180.

In an embodiment, the opening prevention assembly 160 comprises an opening prevention elastic element 177 provided between the opening prevention connecting rod 175 and the lid 102. The opening prevention elastic element 177 provides an elastic force for the movement of the opening prevention connecting rod 175. The opening prevention elastic element 177 abuts between the lid handle 178 and the opening prevention connecting rod 175. The opening prevention elastic element 177 is sleeved outside the guiding bar 181, and elastically deforms along the guiding bar 181. The opening prevention elastic element 177 is located between the elastic snap-fit tabs 180.

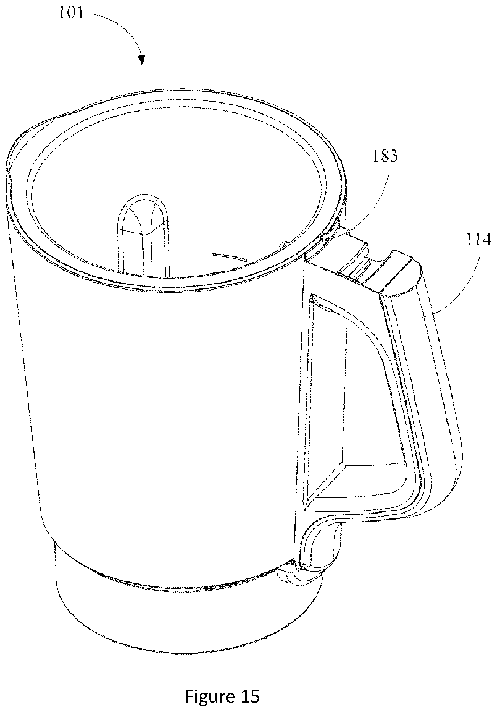

In an embodiment, one of the opening prevention connecting rod 175 and the bowl assembly 101 is provided with a protruding locking bump, and the other is recessed to form a locking lot that cooperates with the locking bump. Figure 15 is a schematic view in perspective of the bowl assembly 101. With reference to Figures 14 and 15, in the illustrated embodiment, the opening prevention connecting rod 175 is provided with a protruding locking bump 182, and the bowl assembly 101 is recessed to form a locking slot 183 that cooperates with the locking bump 182. In an embodiment, the locking slot 183 is formed at an outer side wall of the bowl opening of the bowl assembly 101, and the locking bump 182 is formed at the opening prevention connecting rod 175. The locking slot 183 is located above the bowl handle 114. In another embodiment, the bowl assembly 101 is provided with the protruding locking bump 182, and the opening prevention connecting rod 175 is recessed to form a locking slot 183 that cooperates with the locking bump 182. In a locked state, the locking bump 182 is held in a snap-fit manner inside the locking slot 183. In an unlocked state, when the lid 102 is rotated and the locking bump 182 is moved out of the locking slot 183, the opening prevention connecting rod 175 is pressed by the bowl assembly 101 to move, and the opening prevention elastic element 177 is compressed, thus the lid 102 is opened.

Still with reference to Figures 13 and 14, the lid 102 is formed with a venting hole 186 that is in communication with the bowl cavity 110, and the opening prevention valve 174 is movably assembled to the venting hole 186 of the lid 102. The opening prevention valve 174 seals the venting hole 186 when it is in a sealed state. In an embodiment, the opening prevention assembly 160 comprises an opening prevention sleeve 184 that is fixed to the lid 102. The opening prevention valve 174 is provided through the opening prevention sleeve 184 in a manner capable of moving up and down. The opening prevention sleeve 184 is fixedly assembled to the inner lid 120 and sealed with the inner lid 120. The end of the opening prevention valve 174 that is located below the opening prevention sleeve 184 is provided with an opening prevention sealing ring 185, sealing the gap between the opening prevention valve 174 and the opening prevention sleeve 184. When the opening prevention valve 174 is lifted to the highest point, the opening prevention sealing ring 185 is located between the opening prevention valve 174 and the opening prevention sleeve 184, sealing the gap between the opening prevention valve 174 and the opening prevention sleeve 184, thus sealing the venting hole 186 and maintaining the pressure inside the bowl. When the opening prevention valve 174 moves downward from the highest point, a venting gap appears between the opening prevention valve 174 and the opening prevention sleeve 184, thus opening the venting hole 186, and allowing the release of pressure. When the pressure is released to be equivalent to outside air pressure, the opening prevention valve 174 can fall down to the lowest point and be separated from the opening prevention connecting rod 175.

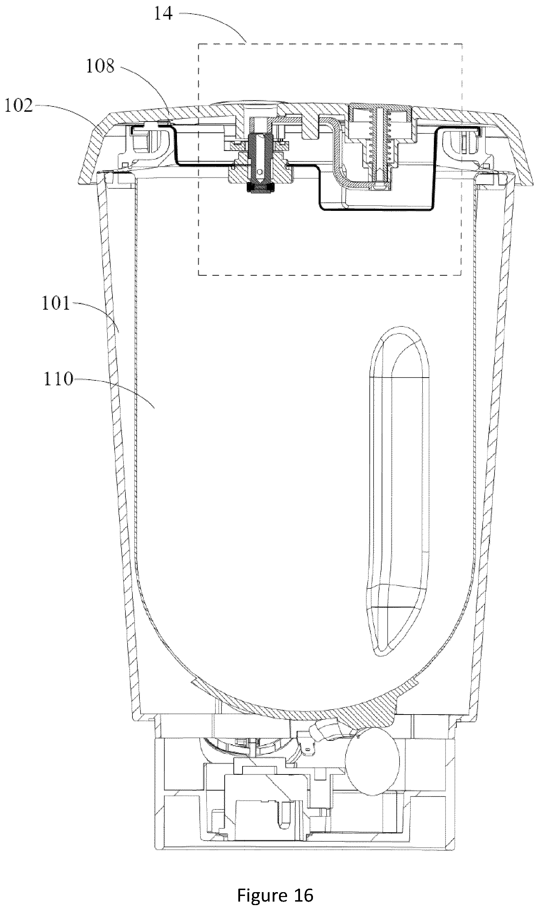

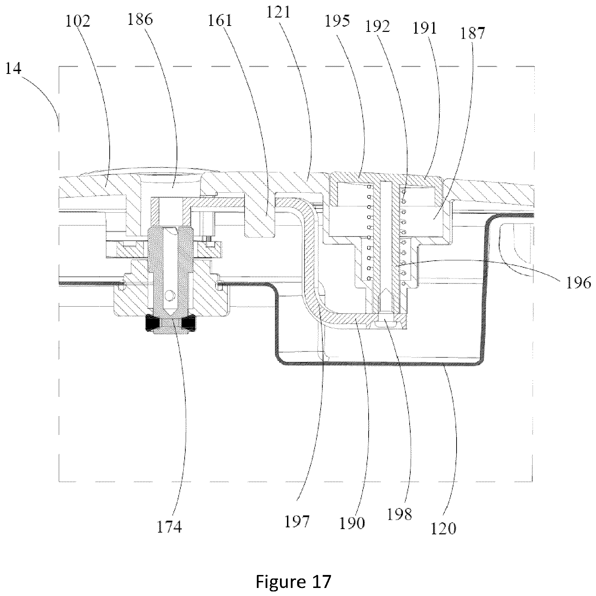

Figure 16 is a sectional view along C-C in Figure 1 of the lid 102 and the bowl assembly 101. Figure 17 is an enlarged view of the area 14 in Figure 16. The lid assembly 108 comprises a pressure releasing assembly 190 movably assembled to the lid 102 and abuts against the opening prevention valve 174. The pressure releasing assembly 190 moves, pushing the opening prevention valve 174 to move, which opens the venting hole 186 and permits vapor to be evacuated, releasing the pressure inside the bowl. At the end of cooking food materials or when opening the lid during cooking, the pressure releasing assembly 190 can push the opening prevention valve 174 to move, achieving a quick pressure release and cover opening, to save time for a user. In an embodiment, the pressure releasing assembly 190 is assembled to the outer lid 121 and located between the outer lid 121 and the inner lid 120.

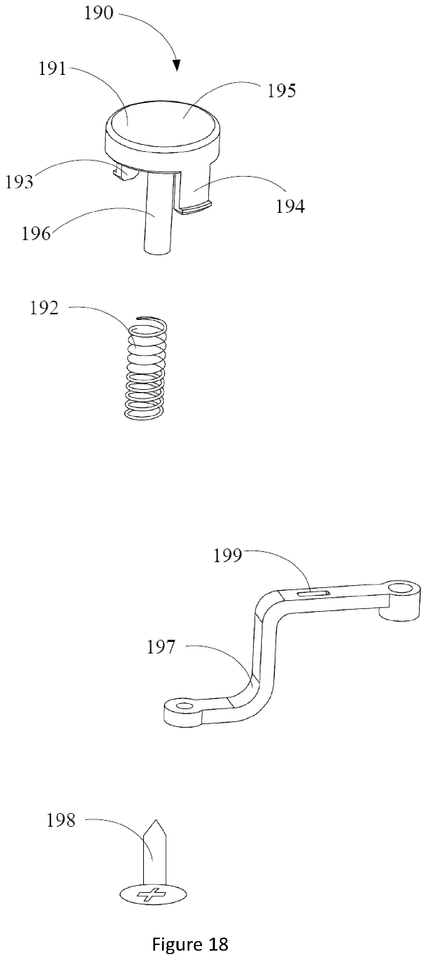

Figure 18 is an exploded view in perspective of the pressure releasing assembly 190. With reference to Figures 16 to 18, the pressure releasing assembly 190 comprises a pressure releasing button 191 that is movably assembled to the lid 102 in a manner capable of moving up and down for a user to press. The lid 102 is formed with a mounting hole 187 for mounting the pressure releasing button 191. The pressure releasing mounting hole 187 traverses the outer lid 121. In an embodiment, the pressure releasing button 191 comprises a first snap-fit hook 193 and a second snap-fit hook 194. As shown in Figure 11, the lid 102 is provided with a first snap-fit hole 188 and a second snap-fit hole 189. The first snap-fit hook 193 is snap-fitted at the first snap-fit hole 188, and the second snap-fit hook 194 is snap-fitted at the second snap-fit hole 189. As such, the pressure releasing button 191 is assembled on the lid 102. The first snap-fit hole 188 and the second snap-fit hole 189 are formed at the outer lid 121 and can be located outside the pressure releasing mounting hole 187.

The pressure releasing button 191 comprises a pressing part 195 that is exposed outside the pressure releasing mounting hole 187 for a user to press. The first snap-fit hook 193 and the second snap-fit hook 194 protrude downward from the pressing part 195 and can be located at the edge of the pressing part 195. The pressure releasing button 191 protrudes downward at the central part of the pressing part 195 to form a pressing guiding column 196. In an embodiment, the width of the first snap-fit hook 193 and that of the second snap-fit hook 194 are not equal. Thus, the first snap-fit hook 193 and the second snap-fit hook 194 cannot be reversely mounted. In an embodiment, the difference between the width of the first snap-fit hook 193 and that of the second snap-fit hook 194 is not smaller than 1 mm.

Still with reference to Figures 17 and 18, the pressure releasing button 190 comprises an elastic element 192 provided between the pressure releasing button 191 and the lid 102. When the pressure releasing button 191 is pressed down, the pressure releasing elastic element 192 is compressed. After the pressing is released, the pressure releasing elastic element 192 provides an elastic force for the pressure releasing button 191 to return to position. The pressure releasing elastic element 192 is located inside the pressure releasing mounting hole 187 and abuts between the pressure releasing button 191 and the outer lid 121. The pressure releasing elastic element 192 can be sleeved outside the pressing guiding column 196, with its top end pressed against the pressing part 195.

The pressure releasing assembly 190 comprises a pressure releasing connecting rod 197 assembled to the pressure releasing button 191. The pressure releasing connecting rod 197 abuts against the opening prevention valve 174. The pressure releasing connecting rod 197 can be fixed to the pressure releasing button 191 by means of a pressure releasing fixing element 198 (such as a screw). When the pressure releasing button 191 is pressed, it pushes the pressure releasing connecting rod 197 to move downward, which in turn pushes the opening prevention valve 174 to move downward, resulting in the opening of the venting hole 186. The pressure releasing connecting rod 197 is fixedly assembled to the bottom end of the pressing guiding column 196 by means of the pressure releasing fixing element 198. The pressure releasing connecting rod 197 is located below the pressure releasing mounting hole 187.

In an embodiment, the lid 102 is provided with a connecting rod guiding column 161 protruding towards the pressure releasing connecting rod 197. The pressure releasing connecting rod 197 is perforated with a connecting rod guiding hole 199 that is sleeved on the connecting rod guiding column 161. The connecting rod guiding hole 199 moves along the connecting rod guiding column 161. The connecting rod guiding column 161 limits the position of the pressure releasing connecting rod 197 and guides the movement of the pressure releasing connecting rod 197. The connecting rod guiding column 161 protrudes from the inner bottom face of the outer lid 121. The bottom end face of the connecting rod guiding column 161 is higher than the bottom end of the pressure releasing mounting hole 187. The pressure releasing connecting rod 197 extends transversally from the bottom end of the pressure releasing button 191 towards the opening prevention valve 174, and then extends upward to approach the inner bottom face of the outer lid 121 and cooperates with the connecting rod guiding column 161, and then transversally extends towards the opening prevention valve 174, until the top end of the opening prevention valve 174.

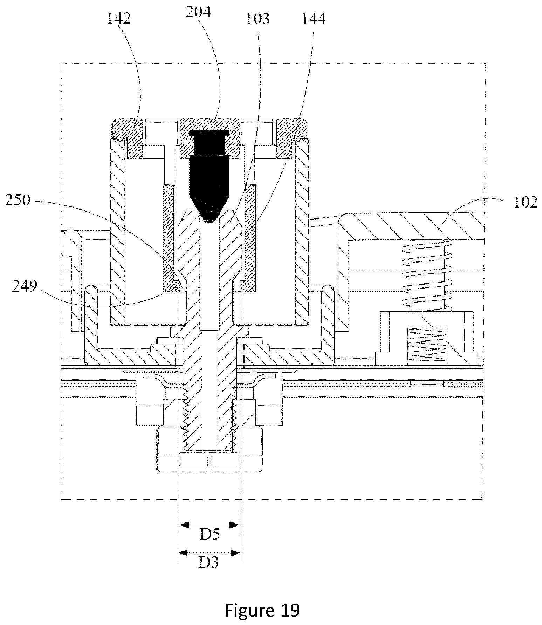

Figure 19 is a partial sectional view of another embodiment of the pressure limiting valve 204 and the lid 102. The pressure limiting valve 204 shown in Figure 19 is similar to the pressure limiting valve 104 shown in Figures 4 and 5. Comparing to the pressure limiting valve 104 shown in Figures 4 and 5, an elastic part 249 of the pressure limiting valve 204 shown in Figure 19 is provided at a bottom opening of the valve core 142. The elastic part 249 is located inside the bottom end of the sleeve part 144 of the valve core 142. The material of the elastic part 249 can comprise a plastic. The elastic part 249 can be integrally formed with the valve core 142. In an embodiment, the elastic part 249 can be in the form of an elastic sheet. In an embodiment, the elastic part 249 can comprise a protruding portion provided to protrude inside the valve core 142. One or more protruding portions can be provided. In some embodiments, the elastic part 249 can be in the form of rectangular, cylinder, or semi-sphere, etc.

In the present embodiment, the elastic part 249 is formed with a through hole 250 through which the venting tube 103 passes and extends into the valve core 142. The difference between the maximum outer diameter D3 of the venting tube 103 that extends into the sleeve part 144 and the opening diameter D5 of the through hole 250 is comprised between 0.6 mm and 1.0 mm. The through hole 250 can be similar to the through hole 150 shown in Figure 5. In another embodiment, the through hole 250 can be a hole formed by a protruding portion and the inner wall of the valve core 142 for the venting tube 103 to pass through, or a hole formed by multiple protruding portions for the venting tube 103 to pass through. The diameter D5 of the through hole 250 is the radial length between an inner end of the protruding portion and the corresponding inner wall of the valve core 142, or the diameter of the circle on which the inner end of the multiple protruding portions is located.

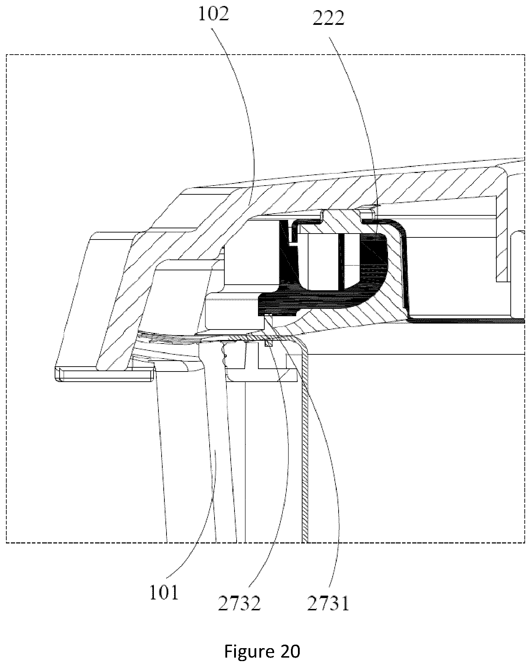

Figure 20 is a partial enlarged view of another embodiment of the lid sealing ring 222. The lid sealing ring 222 shown in Figure 20 is similar to the lid sealing ring 122 shown in Figure 12. Comparing to the lid sealing ring 122, the sealing rib of the lid sealing ring 222 shown in Figure 20 comprises ring sealing ribs 2731 and 2732 protruding from the lid sealing ring 222, improving the sealing results.

In an embodiment, the ring sealing ribs comprise an upper rib 2731 protruding towards the lid 102 and pressing against the lower end face of the lid 102. Thus, the lid 102 is pressed against the upper rib 2731, improving the sealing results. In the illustrated embodiment, the upper rib 2731 is pressed against the lower end face of the sealing ring bracket 123. One or more upper ribs 2731 can be provided in the radial direction. In an embodiment, the ring sealing ribs comprise a lower ring 2732 protruding towards and pressing against the upper end face of the bowl opening the bowl assembly 101. One or more lower sealing ribs 2732 can be provided in the radial direction. In the present embodiment, the ring sealing ribs comprise the upper rib 2731 and the lower rib 2732. The upper rib 2731 and the lower rib 2732 can be longitudinally aligned. In another embodiment, the ring sealing ribs comprise the upper rib 2731 or the lower rib 2732.

In another embodiment, the sealing rib comprises a ring sealing rib and a lid sealing rib protruding from the lower end face of the lid 102. The ring sealing rib can comprise an upper rib 2731 and/or a lower rib 2732. The lid sealing rib is for example the lid sealing rib 173 shown in Figure 12. The lid sealing rib presses the lid sealing ring 222 to the upper end face of the bowl opening of the bowl assembly 101. The lid sealing rib and the ring sealing rib are arranged in the radial direction of the lid 102. Thus, the lid sealing ring 222 can be better pressed to the bowl assembly 101, ensuring a better sealing result. In an embodiment, the lid sealing rib and the upper rib 2731 of the ring sealing rib can be arranged in the radial direction of the lid 102, and the lid sealing rib and the lower rib 2732 of the ring sealing rib can be longitudinally aligned.

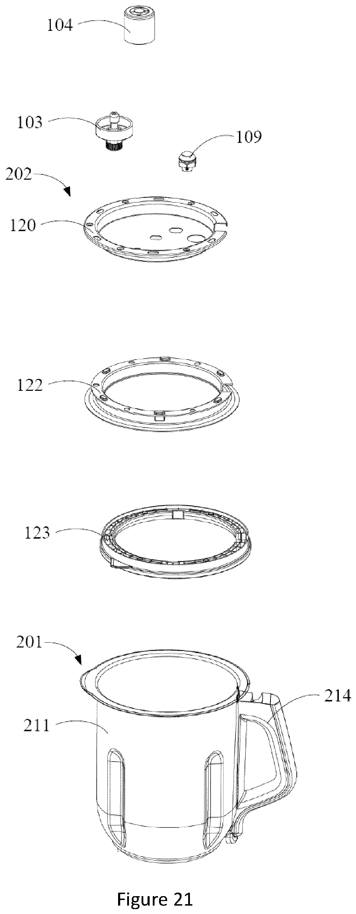

Figure 21 is an exploded view in perspective of another embodiment of the lid 202 and the bowl assembly 201. The lid 202 shown in Figure 21 is similar to the lid 102 shown in Figure 2. Comparing to the lid 102 shown in Figure 2, the lid 202 shown in Figure 21 comprises the metal lid 120, with the outer lid omitted. The venting tube 103 and the safety valve 109 are mounted on the metal lid 120. The venting tube 103 is covered by the pressure limiting valve 104. The metal lid 120 is further mounted with the sealing ring bracket 123 and the lid sealing ring 122.

The bowl assembly 201 shown in Figure 21 is similar to the bowl assembly 101 shown in Figure 2. The bowl assembly 201 shown in Figure 21 comprises a metal bowl 211 and a bowl handle 214 assembled to the metal bowl 211, with the outer bowl omitted.

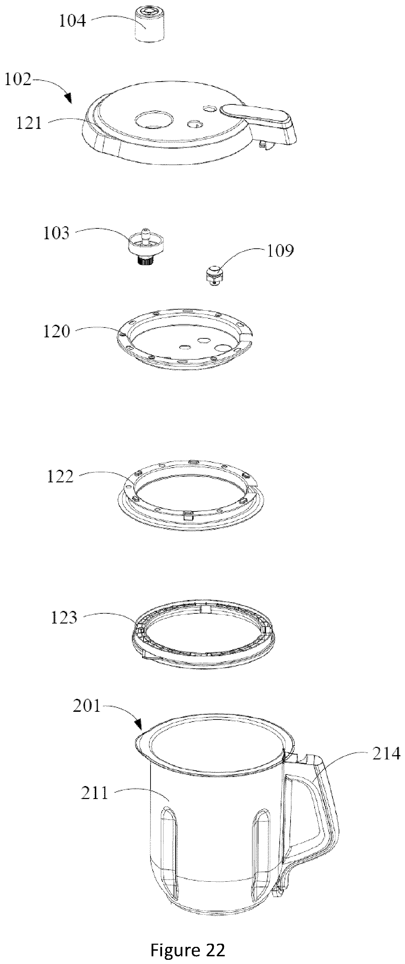

Figure 22 is an exploded view in perspective of another embodiment of the lid 102 and the bowl assembly 201. The lid 102 shown in Figure 22 is similar to the lid 102 shown in Figure 2 and comprises the metal lid 120 and the outer lid 121. The lid 102 further comprises the sealing ring bracket 123 and the lid sealing ring 122 assembled to the metal lid 120 and the outer lid 121. The metal lid 120 is mounted with the venting tube 103 and the safety valve 109. The venting tube 103 is covered by the pressure limiting valve 104. It is not further described here. The bowl assembly 201 shown in Figure 22 is similar to the bowl assembly 201 shown in Figure 21 and comprises the metal bowl 211 and the bowl handle 214 assembled to the metal bowl 211, with the outer bowl omitted. It is not further described here.

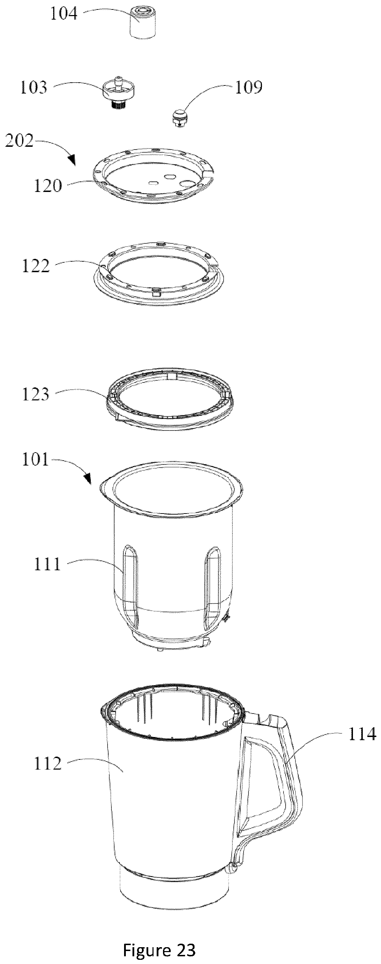

Figure 23 is an exploded view in perspective of another embodiment of the lid 202 and the bowl assembly 101. The lid 202 shown in Figure 23 is similar to the lid 202 shown in Figure 21, and comprises the metal lid 120, with the outer lid omitted. The metal lid 120 is mounted with the venting tube 103 and the safety valve 109. The venting tube 103 is covered by the pressure limiting valve 104. The metal lid 120 is further mounted with the sealing ring bracket 123 and the lid sealing ring 122. The bowl assembly 101 shown in Figure 23 is similar to the bowl assembly 101 shown in Figure 2 and comprises the metal bowl 211 and the outer bowl 112. The bowl handle 114 is assembled outside the outer bowl 112.

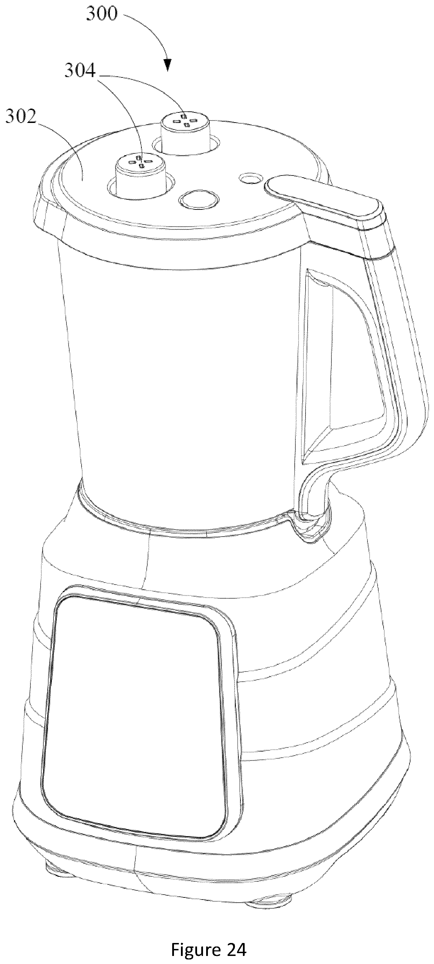

Figure 24 is a schematic view in perspective of another embodiment of the blender 300. The blender 300 shown in Figure 24 is similar to the schematic view in perspective of the blender 100 shown in Figure 1. Comparing to the blender 100 shown in Figure 1, the lid 302 of the blender 300 shown in Figure 24 is provided with at least two venting tubes. The blender 300 comprises at least two pressure limiting valves 304 provided on and covering the corresponding venting tubes, achieving double pressure limiting protection or multiple pressure limiting protection. The venting tubes are similar to the venting tube 103 shown in Figure 4. At least two venting tubes are separately provided. In the embodiment shown in Figure 24, the blender 300 comprises two pressure limiting valves 304. In another embodiment, the blender 300 can be provided with three or more pressure limiting valves 304.

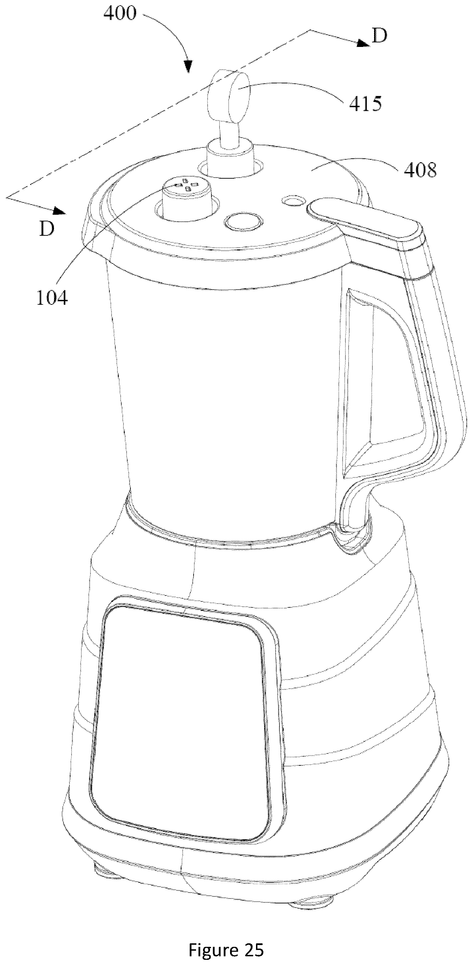

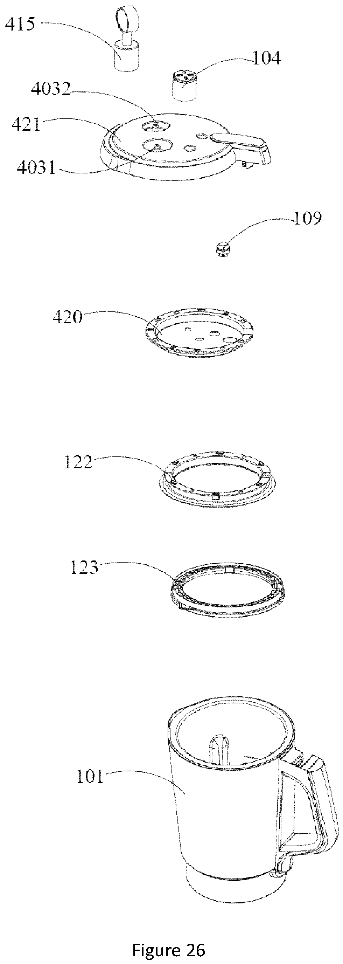

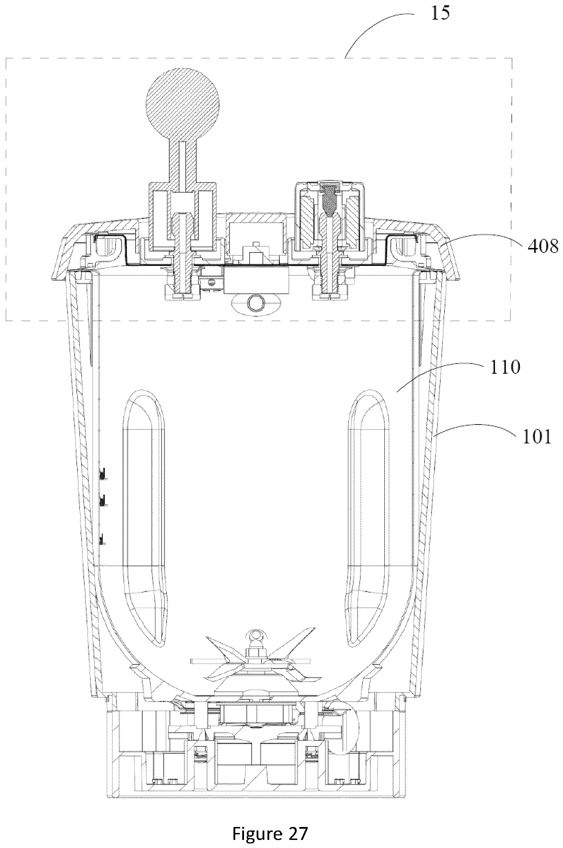

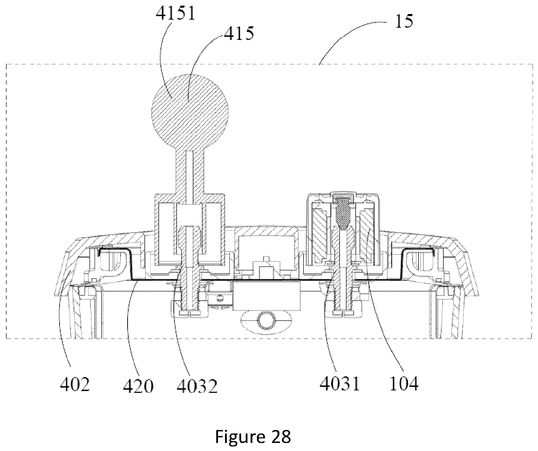

Figure 25 is a schematic view in perspective of another embodiment of the blender 400. Figure 26 is a partial exploded view in perspective of the blender 400 shown in Figure 25. Figure 27 is a sectional view along D-D in Figure 25 of a lid assembly 408 and a bowl assembly 101 of the blender 400. Figure 28 is an enlarged view of the area 15 in Figure 27. The blender 400 shown in Figures 25 to 28 is similar to the blender 100 shown in Figure 1. Comparing to the blender 100 shown in Figure 1, the lid assembly 408 of the blender 400 shown in Figures 25 to 28 comprises a pressure detector 415 assembled to the lid 402 and in communication with the bowl cavity 110 of the bowl assembly 101. It detects the air pressure inside the bowl cavity 110 and can display the air pressure. The user can check the air pressure at any time, allowing an increased feeling of safety during use.

With reference to Figures 25 to 28, the lid 402 is provided with a venting tube 4032 in communication with the cup cavity 110. The pressure detector 415 is in communication with the venting tube 4032. The air pressure inside the bowl is transmitted to the pressure detector 415 via the venting tube 4032. In an embodiment, the pressure detector 415 is provided on and covering the venting tube 4032. In another embodiment, the pressure detector 415 communicates with the venting tube 4032 via a conduit. In an embodiment, a pressure displayer 4151 comprises a display dial through which air pressure is displayed. The display dial can have scales and a pointer. In another embodiment, a pressure displayer 4151 comprises a digital displayer that digitally displays the air pressure. The digital displayer can comprise an LCD screen displaying the pressure values.

In an embodiment, the venting tube comprises a first venting tube 4031 and a second venting tube 4032. The pressure limiting valve 104 is provided on and covering one of the first venting tube 4031 and the second venting tube 4032, and the pressure detector 415 is in communication with the other of the first venting tube 4031 and the second venting tube 4032. The first venting tube 4031 and the second venting tube 4032 are assembled to the lid 402 and can be similar to the venting tube 103 shown in Figure 4. The lid 402 has two through holes, where the first venting tube 4031 and the second venting tube 4032 are respectively provided. In an embodiment, first venting tube 4031 and the second venting tube 4032 are assembled to the inner lid 420. The pressure limiting valve 104 is similar to the pressure limiting valve 104 shown in Figure 1 and is not further described below. In Figures 25 to 28, the pressure limiting valve 104 covers the first venting tube 4031, and the pressure detector 415 is in communication with the second venting tube 4032.

Similar to the blender 100, the lid assembly 408 of the blender 400 further comprises a safety valve 109 assembled to the lid 402. The inner lid 420 is assembled with a lid sealing ring 122 and a sealing ring bracket 123. Reference is made to the relative embodiments above for a detailed description. They are not further described here.

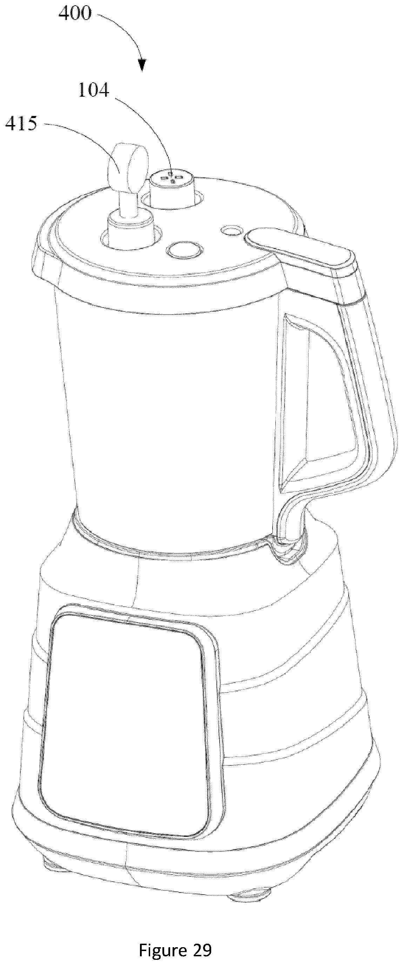

Figure 29 is a schematic view in perspective of another configuration of the blender 400. With reference to Figure 29, the first venting tube 4031 and the second venting tube 4032 can have the same structure and size. The pressure limiting valve 104 and the pressure detector 415 can switch positions, and correspondingly, be fitted and connected with the first venting tube 4031 and the second venting tube 4032. Thus, assembling by a user is facilitated. In Figure 29, the pressure limiting valve 104 covers the second venting tube 4032, and the pressure detector 415 is in communication with the first venting tube 4031.

In another embodiment, the first venting tube 4031 and the second venting tube 4032 have different structures and/or sizes and are respectively adapted to the pressure limiting pressure 104 and the pressure detector 415. The pressure limiting valve 104 and the pressure detector 415 cannot switch positions.

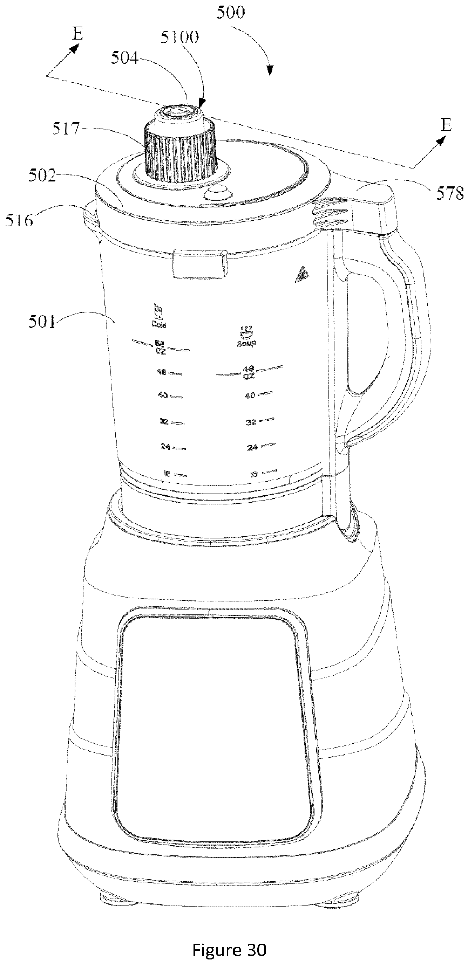

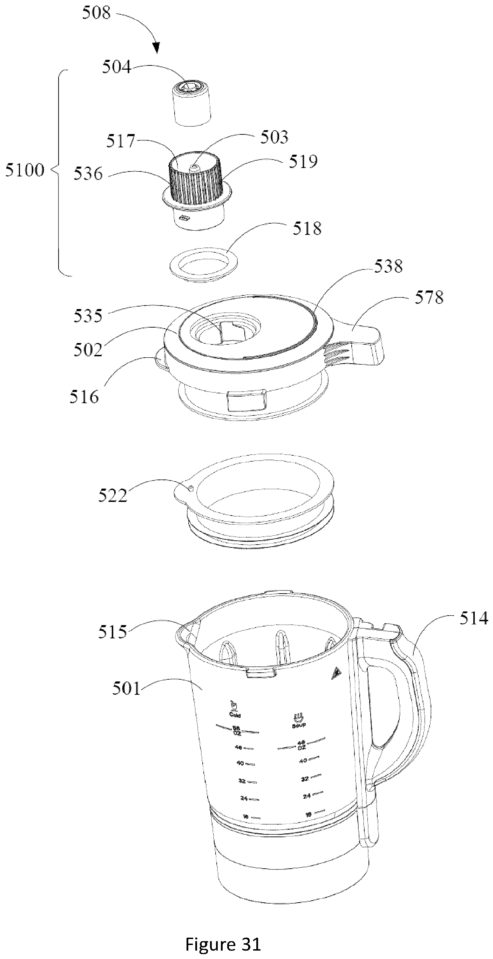

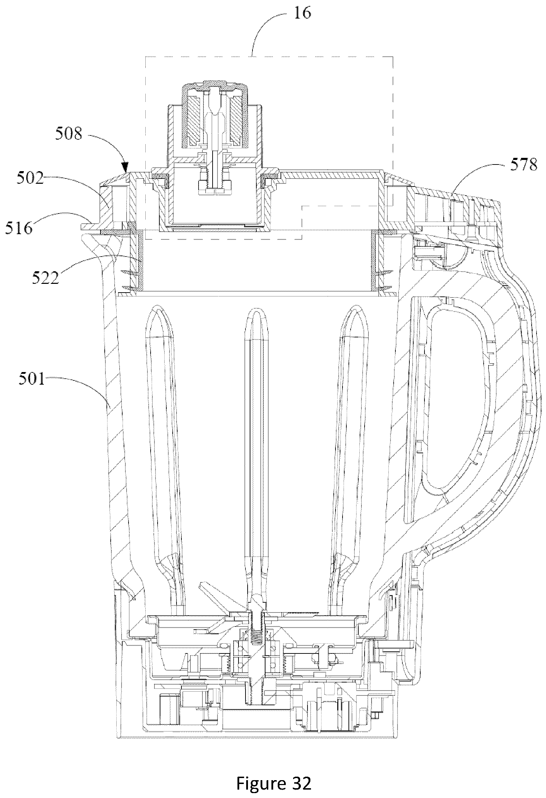

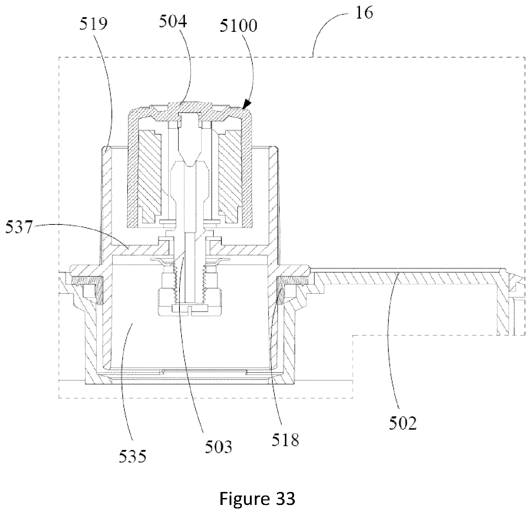

Figure 30 is a schematic view in perspective of another embodiment of the blender 500. Figure 31 is an exploded view in perspective of a lid assembly 508 and a bowl assembly 501 of the blender 500 shown in Figure 30. Figure 32 is a sectional view along E-E in Figure 30 of the lid assembly 508 and the bowl assembly 501. Figure 33 is an enlarged view of the area 16 in Figure 32. The blender 500 shown in Figures 30 to 33 is similar to the blender 100 shown in Figure 1. The lid 502 comprises a lid handle 578 and a lid mouth 516 opposed to the lid handle 578. The lid 502 is provided with a through hole 535 that vertically traverses the lid 502. The through hole 535 is nearer to the lid mouth 516 than to the lid handle 578. A venting tube 503 is provided at the through hole 535 of the lid 502. A pressure limiting valve 504 is arranged to cover the venting tube 503 in a manner capable of moving up and down. The through hole 535 is offset from the center of the lid 502 away from the lid handle 578, and near the lid mouth 516. When opening the lid, a user holds the lid handle 578 by hand, which away from the through hole 535, thus greatly reducing the risk of burning the user by vapor blown out of the through hole 535 when the lid is opened.

Comparing to the blender 100 shown in Figure 1, the main differences of the blender 500 shown in Figures 30 to 33 are as follows: the lid assembly 508 comprises a slight pressurization cover 5100 that is optionally provided on the through hole 535 and comprises the venting tube 503 and the pressure limiting valve 504. The slight pressurization cover 5100 can be optionally provided on the lid 502 and is removable from the lid, facilitating the cleaning. This allows an easy and thorough cleaning of the venting tube, and ensures that the venting tube 503 is not blocked, thus increases the safety of pressurized cooking. Moreover, if the slight pressurization cover 5100 is damaged, it can be easily replaced by a new slight pressurization cover. In addition, by removing the slight pressurization cover 5100, the through hole 535 of the lid 502 can be assembled with other parts, such as a venting lid, allowing to have more functions of the blender.

The slight pressurization cover 5100 comprises a venting lid 517 assembled inside the through hole 535. The venting tube 503 is provided inside the venting lid 517. The venting lid 517 is nearer to the lid mouth 516 than to the lid handle 578. The venting tube 503 is assembled to the lid 502 by means of the venting lid 517 and can be removed from the lid 502 together with the venting lid 517, facilitating cleaning. A venting lid sealing ring 518 is provided between the venting lid 517 and the lid 502, sealing the gap between the venting lid 517 and the lid 502. When the lid 502 covers the bowl assembly 501, the lid handle 578 is connected to match with the bowl handle 514, the lid mouth 516 covers the bowl mouth 515 of the bowl assembly 501, and the venting tube 503 is in communication with the bowl cavity.

In an embodiment, a venting tube bracket 537 is formed by extending transversally inside the venting lid 517. The venting tube 503 is provided to traverse the venting tube bracket 537. The venting tube bracket 537 can be higher than the top face of the lid 502. The top end of the venting tube 503 is higher than the top face of the lid 502. The pressure limiting valve 504 can be mounted inside the venting lid 517. The top end of the pressure limiting valve 504 exceeds the top end of the venting lid 517, to facilitate removing the pressure limiting valve 504.

In an embodiment, the venting lid 517 protrudes upward from inside the through hole 535 to the outside of the upper surface of the lid 502. The venting lid 517 can accelerate the heat dissipation. The venting lid 517 comprises a holding part 519 the protrudes upward out of the through hole 535. The outer side of the holding part 519 is provided with several protruding ribs 536. A user can hold the holding part 519 to remove the venting lid 517. The protruding ribs 536 can prevent sliding when the venting lid 517 is being removed, and increase the area of contact of the venting lid 517 with air, accelerating the dissipation of heat and enhancing user experience when opening the lid. In an embodiment, the outer side of the holding part 519 is formed with at least three protruding ribs 536. In an embodiment, several protruding ribs 536 extend longitudinally, and are arranged circumferentially along the holding part 519, spaced with each other.

In an embodiment, 'as shown in Figure 31, the upper surface of the lid 502 is provided with a protruding water retaining rib 538 forming a barrier between the through hole 535 and the lid handle 578. When the venting lid 517 is opened, hot water drops may flow to the lid handle 578 via the lid 502 and burn the user's hand, the water retaining rib 538 can effectively prevent hot water from flowing to the lid handle 578, reducing the risk of burning. In an embodiment, the water retaining rib 538 is nearer the lid handle 578 than to the lid mouth 516 and can effectively stop water drops flowing towards the lid handle 578. In an embodiment, the water retaining rib 538 extends in the form of an arc.

The bottom of the lid 502 is assembled with a lid sealing ring 522. In the present embodiment, the lid sealing ring 522 is sleeved at the bottom of the lid 502. The bottom of the lid 502 extends inside the bowl opening of the bowl assembly 501. The lid sealing ring 522 seals the gap between the inner side of the bowl opening of the bowl assembly 501 and the bottom of the lid 502 and also seals the gap between the upper end face of the bowl opening of the bowl assembly 501 and the lid 502.

What has been described above are merely preferred embodiments of the invention and not to limit the scope of the invention. All modifications, equivalent replacements, and improvements within the spirit and principle of the invention fall within the scope of protection of the application.

## Claims

1. A blender comprising:
a bowl assembly (101, 201, 501) forming a bowl cavity (110);
a mixing blade (106) provided inside the bowl cavity (110); and
a lid assembly (108) arranged to cover the bowl assembly (101, 201, 501), and comprising:
a lid (102, 202, 302, 402, 502) provided with a through hole (135, 535) that traverses the lid (102, 202, 302, 402, 502) from top to bottom;
a venting tube (103, 4031, 4032, 503) provided in the through hole (135, 535) of the lid (102, 202, 302, 402, 502) and in communication with the bowl cavity (110), comprising an air outlet (130); and,
a pressure limiting valve (104, 204, 304, 504) that is arranged to cover the venting tube (103, 4031, 4032, 503) and is capable of moving up and down, the pressure limiting valve blocking the air outlet (130) of the venting tube (103, 4031, 4032, 503) when the air pressure inside the bowl cavity (110) is lower than a pressure threshold, and opening the air outlet (130) of the venting tube (103, 4031, 4032, 503) when the air pressure inside the bowl cavity (110) is not lower than the pressure threshold,
**characterized in that** the lid assembly (508) comprises a venting lid (517) that is assembled to the through hole (535), the venting tube (503) being provided inside the venting lid (517), a venting lid sealing ring (518) being provided between the venting lid (517) and the lid (502), the pressure limiting valve (504) being mounted on the venting lid (517).

2. The blender according to claim 1, **characterized in that** the pressure limiting valve (104, 204, 304, 504) comprises a valve body (141) and a valve core (142) fixed to the valve body (141) and comprising a sleeve part (144) that is sleeved outside the venting tube (103, 4031, 4032, 503).

3. The blender according to claim 2, **characterized in that** the bottom of the pressure limiting valve (104, 204, 304, 504) is provided with an elastic part (149, 249) that extends transversally inward, the venting tube (103, 4031, 4032, 503) being inserted into the pressure limiting valve (104, 304, 504) by passing through the elastic part (149, 249).

4. The blender according to anyone of claims 2 or 3, **characterized in that** the valve core (142) comprises a valve core cap (145) that covers the sleeve part (144) and abuts the valve body (141), and a counterweight part (146) that is protruded below the valve core cap (145) and surrounds the outside of the sleeve part (144), the lower end face of the counterweight part (146) being not lower than the lower end face of the sleeve part (144).

5. The blender according to anyone of claims 2 to 4, **characterized in that** the pressure limiting valve (104, 304, 504) comprises a plug (143) that is fixed inside the valve core (142) and matches the venting tube (103, 4031, 4032, 503) for blocking the air outlet (130).

6. The blender according to anyone of claims 1 to 5, **characterized in that** the lid (302) is provided with at least two venting tubes (103), and the blender comprises at least two pressure limiting valves (304) that are arranged to cover the corresponding venting tubes (103).

7. The blender according to anyone of claims 1 to 6, **characterized in that** the venting tube (4031, 4032) comprises a first venting tube (4031) and a second venting tube (4032), the pressure limiting valve (104) is arranged to cover one of the first venting tube (4031) and the second venting tube (4032), and the lid assembly (408) comprises a pressure detector (415) that is in communication with the other of the first venting tube (4031) and the second venting tube (4032).

8. The blender according to anyone of claims 1 to 7, **characterized in that** a lid sealing ring (122, 222) is provided between the lid (102, 202, 302, 402) and the upper end face of the bowl opening of the bowl assembly (101, 201), and at least one of the lid (102, 202, 302, 402) and the lid sealing ring (122, 222) is preferably provided with a sealing rib (173, 2731, 2732) protruded at a location corresponding to the upper end face of the bowl opening of the bowl assembly (101, 201).

9. The blender according to anyone of claims 1 to 8, **characterized in that** the lid assembly (108) comprises an opening prevention assembly (160) movably assembled to the lid (102, 202, 302, 402, 502) between a locked state and an unlocked state, the opening prevention assembly (160) locking the lid (102, 202, 302, 402, 502) and the bowl assembly (101, 201, 501) when the air pressure inside the bowl cavity (110) is not lower than the pressure threshold, and unlocking the lid (102, 202, 302, 402, 502) and the bowl assembly (101, 201, 501) when the air pressure inside the bowl cavity (110) is lower than the pressure threshold.

10. The blender according to claim 9, **characterized in that** the opening prevention assembly (160) comprises an opening prevention valve (174) and an opening prevention connecting rod (175) that cooperates with the opening prevention valve (174) in a position limiting way to be locked with the bowl assembly (101) when the air pressure inside the bowl cavity (110) is not lower than the pressure threshold.

11. The blender according to anyone of claims 9 or 10, **characterized in that** the lid (102, 202, 302, 402, 502) is provided with a venting hole (186) that is in communication with the bowl cavity (110), and the opening prevention assembly (160) comprises an opening prevention valve (174) that is movably assembled to the venting hole (186) of the lid (102, 202, 302, 402, 502) and capable of sealing the venting hole (186) in a sealed state.

12. The blender according to claim 11, **characterized in that** the blender further comprises a pressure releasing assembly (190) that is movably assembled to the lid (102, 202, 302, 402, 502) and abuts the opening prevention valve (174), the movement of the pressure releasing assembly (190) drives the opening prevention valve (174) to move to open the venting hole (186).
